(19) Europäisches Patentamt
European Patent Office
Office européen des brevets

(11) **EP 4 753 349 A1**

(12) **EUROPEAN PATENT APPLICATION**
published in accordance with Art. 153(4) EPC

(43) Date of publication:
**03.06.2026 Bulletin 2026/23**

(21) Application number: **23946126.2**

(22) Date of filing: **24.07.2023**

(51) International Patent Classification (IPC):
**H04W 72/0446** *(2023.01)*

(52) Cooperative Patent Classification (CPC):
**H04W 72/0446**

(86) International application number:
**PCT/CN2023/108837**

(87) International publication number:
**WO 2025/020032 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **HU, Yi
Dongguan, Guangdong 523860 (CN)**
• **LI, Haitao
Dongguan, Guangdong 523860 (CN)**

(74) Representative: **RGTH
Patentanwälte PartGmbB
Mönckebergstraße 11
20095 Hamburg (DE)**

(54) **WIRELESS COMMUNICATION METHODS, TERMINAL DEVICES, AND NETWORK DEVICES**

(57)    Provided are wireless communication methods, terminal devices, and network devices. A wireless communication method comprises: a first terminal device receiving a first PDSCH for an MBS; and, according to a first offset, the first terminal device determining a time domain resource corresponding to a first PUCCH, the first PUCCH being used for bearing HARQ feedback information corresponding to the first PDSCH, wherein the first offset is determined on the basis of one or more of the following: an offset specific to the first terminal device; an offset specific to a first terminal device group where the first terminal device is located, and a cell common offset.

```
┌─────────────────────┐                              ┌─────────────────────┐
│ First terminal device│                              │   Network device    │
└─────────────────────┘                              └─────────────────────┘
          │                                                      │
          │◄────────── S910: a first PDSCH for an MBS ───────────│
          │                                                      │
┌─────────────────────────────┐                                 │
│ S920: determine a time domain│                                 │
│ resource corresponding to a  │                                 │
│ first PUCCH according to a    │                                │
│ first offset                  │                                │
└─────────────────────────────┘                                 │
```

FIG. 9

## Description

## TECHNICAL FIELD

The present disclosure relates to the field of communication technologies, and more specifically, to a wireless communication method, a terminal device, and a network device.

## BACKGROUND

Certain communication systems (such as non-terrestrial network (NTN) systems) may experience significant delays. Therefore, an offset value (e.g., $K_{offset}$) is usually introduced in such communication systems to enhance the timing relationship in the communication systems.

To achieve network resource sharing and improve resource utilization, a multicast broadcast service (MBS) may be introduced in communication systems. For a physical downlink shared channel (PDSCH) reception of MBS, if the network side is configured with a hybrid automatic repeat request (HARQ) feedback, how to enhance the timing of HARQ feedback for PDSCH reception for the MBS is a problem that needs to be addressed.

## SUMMARY

The present disclosure provides a wireless communication method, a terminal device, and a network device. Various aspects of the present disclosure are introduced below.

In a first aspect, there is provided a wireless communication method, including: receiving, by a first terminal device, a first PDSCH for an MBS; and determining, by the first terminal device, a time domain resource corresponding to a first physical uplink control channel (PUCCH) according to a first offset, the first PUCCH being used to carry HARQ feedback information corresponding to the first PDSCH; where the first offset is determined based on one or more of: an offset dedicated to the first terminal device; an offset dedicated to a first terminal device group to which the first terminal device belongs; or a cell common offset.

In a second aspect, there is provided a wireless communication method, including: transmitting, by a network device, a first PDSCH for an MBS to a first terminal device; and determining, by the network device, a time domain resource corresponding to a first PUCCH according to a first offset, the first PUCCH being used to carry HARQ feedback information corresponding to the first PDSCH; where the first offset is determined based on one or more of: an offset dedicated to the first terminal device; an offset dedicated to a first terminal device group to which the first terminal device belongs; or a cell common offset.

In a third aspect, there is provided a terminal device, where the terminal device is a first terminal device, and includes: a receiving module, configured to receive a first PDSCH for an MBS; and a determining module, configured to determine a time domain resource corresponding to a first PUCCH according to a first offset, the first PUCCH being used to carry HARQ feedback information corresponding to the first PDSCH; where the first offset is determined based on one or more of: an offset dedicated to the first terminal device; an offset dedicated to a first terminal device group to which the first terminal device belongs; or a cell common offset.

In a fourth aspect, there is provided a network device, including: a transmitting module, configured to transmit a first PDSCH for an MBS to a first terminal device; and a determining module, configured to determine a time domain resource corresponding to a first PUCCH according to a first offset, the first PUCCH being used to carry HARQ feedback information corresponding to the first PDSCH; where the first offset is determined based on one or more of: an offset dedicated to the first terminal device; an offset dedicated to a first terminal device group to which the first terminal device belongs; or a cell common offset.

In a fifth aspect, there is provided a terminal device, including a processor, a memory, and a communication interface, where the memory is configured to store one or more computer programs, and the processor is configured to call the computer program in the memory to enable the terminal device to perform part or all of the steps in the method of the first aspect.

In a sixth aspect, there is provided a network device, including a processor, a memory, and a communication interface, where the memory is configured to store one or more computer programs, and the processor is configured to call the computer program in the memory to enable the network device to perform part or all of the steps in the method of the second aspect.

In a seventh aspect, embodiments of the present disclosure provide a communication system, where the system includes the above-mentioned terminal device and/or network device. In another possible design, the system may further include other devices that interact with the terminal device or the network device in the solutions provided by the embodiments of the present disclosure.

In an eighth aspect, the embodiments of the present disclosure provide a computer-readable storage medium, where the computer-readable storage medium stores a computer program, and the computer program enables a computer to perform part or all of the steps in the methods of the above aspects.

In a ninth aspect, the embodiments of the present disclosure provide a computer program product, where the computer program product includes a non-transitory computer-readable storage medium storing a computer program, and the computer program is operable to enable a computer to perform part or all of the steps in the methods of the above aspects. In some implementations, the computer program product may be a software installation package.

In a tenth aspect, the embodiments of the present disclosure provide a computer program, where the computer program is operable to enable a computer to perform part or all of the steps in the methods of the above aspects.

In an eleventh aspect, the embodiments of the present disclosure provide a chip, where the chip includes a memory and a processor, where the processor may call a computer program from the memory and run the computer program to implement some or all of the steps described in the methods of the above aspects.

The embodiments of the present disclosure introduce a first offset to enhance a timing of HARQ feedback for a PDSCH reception of an MBS, the determination of the first offset is related to one or more of: an offset dedicated to a terminal device, an offset dedicated to a terminal device group, or a cell common offset. The introduction of the first offset is conducive to ensuring that HARQ feedback for the PDSCH reception of the MBS can be transmitted successfully, thereby improving the reliability of the MBS service transmission.

## BRIEF DESCRIPTION OF THE DRAWINGS

FIG. 1A is an exemplary diagram of a system architecture of a wireless communication system to which the embodiments of the present disclosure may be applied.

FIG. 1B is another exemplary diagram of a system architecture of a wireless communication system to which the embodiments of the present disclosure may be applied.

FIG. 1C is yet another example diagram of a system architecture of a wireless communication system to which the embodiments of the present disclosure may be applied.

FIG. 2 is an exemplary diagram of an NTN network architecture with transparent payload.

FIG. 3 is an exemplary diagram of an NTN network architecture with regenerative payload.

FIG. 4A is an exemplary diagram of a time delay of an uplink signal reaching a network device in a case where there is no timing advance (TA).

FIG. 4B is an exemplary diagram of a time delay of an uplink signal reaching a network device in a case where a TA exists.

FIG. 5 is an exemplary diagram of a timing relationship of the NTN system.

FIG. 6 is another exemplary diagram of a timing relationship of the NTN system.

FIG. 7 is an exemplary diagram of a point to point (PTP) transmission mode of an MBS.

FIG. 8 is an exemplary diagram of a point to multipoint (PTM) transmission mode of an MBS.

FIG. 9 is a flowchart of a wireless communication method provided by the embodiments of the present disclosure.

FIG. 10 is an exemplary diagram of a possible implementation for determining a first offset provided by the embodiments of the present disclosure.

FIG. 11 is a schematic structural diagram of a terminal device provided by the embodiments of the present disclosure.

FIG. 12 is a schematic structural diagram of a network device provided by the embodiments of the present disclosure.

FIG. 13 is a schematic structural diagram of a communication apparatus provided by the embodiments of the present disclosure.

## DETAILED DESCRIPTION

### Communication system architecture

The technical solutions in the embodiments of the present disclosure may be applied to various communication systems, such as: a global system of mobile communication (GSM), a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, an NTN system, a universal mobile telecommunication system (UMTS), wireless local area networks (WLAN), wireless fidelity (WiFi), a 5th-generation (5G) communication system or other communication systems, such as future communication systems, e.g., a 6th-generation mobile communication system, and a satellite communication system.

Generally speaking, traditional communication systems support a limited number of connections which are easy to be implemented. However, with the development of communication technologies, mobile communication systems will support not only traditional communications, but also, for example, device to device (D2D) communication, machine to machine (M2M) communication, machine type communication (MTC), vehicle to vehicle (V2V) communication, or vehicle to everything (V2X) communication, or the like. The embodiments of the present disclosure may also be applied to these communication systems.

The communication system in the embodiments of the present disclosure may be applied to a carrier aggregation (CA) scenario, a dual connectivity (DC) scenario, or a standalone (SA) networking scenario.

The communication system in the embodiments of the present disclosure may be applied to an unlicensed spectrum, where the unlicensed spectrum may also be considered as a shared spectrum; or, the communication system in the embodiments of the present disclosure may also be applied to a licensed spectrum, where the licensed spectrum may also be considered as a dedicated spectrum.

The embodiments of the present disclosure may be applied to an NTN system, and may also be applied to a terrestrial network (TN) system. By way of example and not limitation, the NTN system includes an NR-based NTN system and an IoT-based NTN system.

The embodiments of the present disclosure describe various embodiments in conjunction with a network device and a terminal device, where the terminal device may also be referred to as a user equipment (UE), an access terminal, a user unit, a user station, a mobile platform, a mobile station (MS), a mobile terminal (MT), a remote station, a remote terminal, a mobile device, a user terminal, a terminal, a wireless communication device, a user agent, a user apparatus, or the like.

In the embodiments of the present disclosure, the terminal device may be a station (STATION, ST) in WLAN, and may be a cellular phone, a cordless phone, a session initiation protocol (SIP) phone, a wireless local loop (WLL) station, a personal digital assistant (PDA) device, a handheld device with wireless communication functions, a computing device or other processing devices connected to a wireless modem, a vehicle-mounted device, a wearable device, a terminal device in a next-generation communication system (such as an NR network), or a terminal device in a future evolved public land mobile network (PLMN) network, or the like.

In the embodiments of the present disclosure, a terminal device may refer to a device that provides voice and/or data connectivity to a user, which may be configured to connect people, objects, and machines, such as a handheld device or vehicle-mounted device with wireless connection functions. The terminal device in the embodiments of the present disclosure may be a mobile phone, a pad (tablet computer), a laptop computer, a PDA, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in smart grid, a wireless terminal in transportation safety, a wireless terminal in smart city, a wireless terminal in smart home, or the like.

Optionally, the UE may be configured to act as a base station. For example, a UE may act as a scheduling entity that provides sidelink signals between UEs in V2X or D2D, etc. For example, a cell phone and a car communicate with each other using sidelink signals. A cellular phone and a smart home device communicate with each other without relaying communication signals through a base station.

By way of example and not limitation, in the embodiments of the present disclosure, the terminal device may be a wearable device. The wearable device may also be referred to as a wearable smart device, which is a general term for wearable devices developed by using wearable technology and intelligent design for everyday wear, such as glasses, gloves, a watch, clothing, and shoes. The wearable device is a portable device that is worn directly on a body, or integrated into a user's clothing or accessories. The wearable device is not only a hardware device, but also implements powerful functions through software support as well as data interaction or cloud interaction. Generalized wearable smart devices include full-featured, large-sized devices that may implement full or partial functionality without relying on smartphones, such as a smart watch or smart glasses, and devices that focus on a certain type of application functionality only and need to be used in conjunction with other devices (such as smartphones), such as various smart bracelets or smart jewelries for monitoring physical signs.

In the embodiments of the present disclosure, the terminal device may be deployed on land, including indoor or outdoor, handheld, wearable or vehicle-mounted; the terminal device may also be deployed on water (e.g., on a steamship); and the terminal device may also be deployed in air (e.g., on an airplane, on a balloon, or on a satellite). In the embodiments of the present disclosure, the terminal device may be fixed or mobile.

The network device in the embodiments of the present disclosure may be a device for communicating with a terminal device. The network device may also be referred to as an access network device or a wireless access network device. For example, the network device may be a base station. The network device in the embodiments of the present disclosure may refer to a radio access network (RAN) node (or device) that connects a terminal device to a wireless network. The base station may broadly cover various names as follows, or be replaced with the following names, such as: a NodeB, an evolved NodeB (eNB), a next generation NodeB (gNB), a relay station, an access point, a transmitting and receiving point (TRP), a transmitting point (TP), a master station (MeNB), a secondary station (SeNB), a multi-standard radio (MSR) node, a home base station, a network controller, an access node, a wireless node, an access point (AP), a transmitting node, a transceiving node, a baseband unit (BBU), a remote radio unit (RRU), an active antenna unit (AAU), a remote radio head (RRH), a central unit (CU), a distributed unit (DU), a positioning node, or the like. The base station may be a macro base station, a micro base station, a relay node, a donor node, or the like, or a combination thereof. The base station may further refer to a communication module, a modem or a chip configured in the aforementioned devices or apparatuses. The base station may further be a mobile switching center, a device that performs base station functions in device to device (D2D), vehicle to everything (V2X), and machine to machine (M2M) communications, a network side device in a 6G network, or a device that performs base station functions in future communication systems, or the like. The base station may support networks of the same or different access technologies. The embodiments of the present disclosure do not limit the specific technology and specific device form adopted by the network device.

The base station may be fixed or mobile. For example, a helicopter or a drone may be configured to act as a mobile base station, and one or more cells may move based on the location of the mobile base station. In other examples, a helicopter or a drone may be configured to act as a device communicating with another base station.

In some deployments, the network device in the embodiments of the present disclosure may refer to a CU or a DU, or the network device includes a CU and a DU. The gNB may further include an AAU.

The network device and the terminal device may be deployed on land, including indoor or outdoor, handheld or vehicle-mounted; the network device and the terminal device may also be deployed on water; and the network device and the terminal device may also be deployed on an aircraft, a balloon and a satellite in air. The embodiments of the present disclosure do not limit the scenarios in which the network device and the terminal device are located.

By way of example and not limitation, in the embodiments of the present disclosure, the network device may have a mobile feature, for example, the network device may be a mobile device. In some embodiments of the present disclosure, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. In some embodiments of the present disclosure, the network device may also be a base station deployed on a location such as land or water.

In the embodiments of the present disclosure, a network device may provide services for a cell, a terminal device may communicate with the network device through transmission resources (e.g., frequency domain resources, or spectrum resources) used by the cell, the cell may be a cell corresponding to the network device (e.g., a base station), and the cell may belong to a macro base station, or a base station corresponding to a small cell. The small cell herein may include: a metro cell, a micro cell, a pico cell, a femto cell, or the like. These small cells have the characteristics of small coverage and low transmission power, and are suitable for providing high-speed data transmission services.

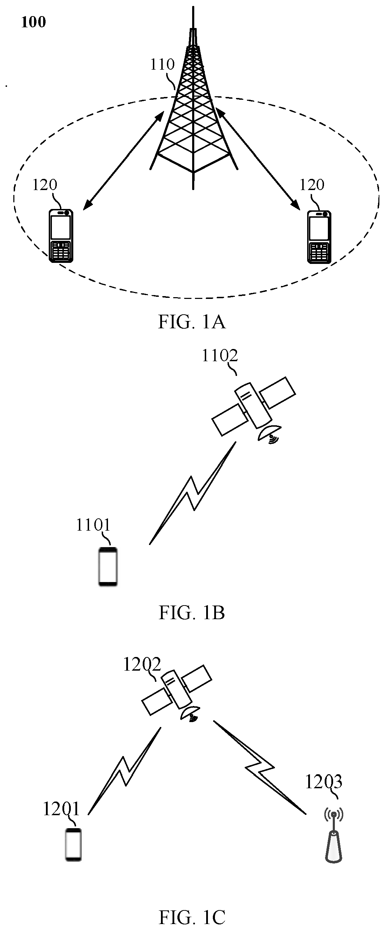

For example, FIG. 1A is a schematic diagram of an architecture of a communication system provided by the embodiments of the present disclosure. As illustrated in FIG. 1A, a communication system 100 may include a network device 110, which may be a device communicating with a terminal device 120 (or referred to as a communication terminal or a terminal). The network device 110 may provide communication coverage for a specific geographical area, and may communicate with terminal devices located within the coverage area.

FIG. 1A exemplarily illustrates a network device and two terminal devices. In some embodiments of the present disclosure, the communication system 100 may include multiple network devices, and there may be other number of terminal devices within the coverage area of each network device, which is not limited in the embodiments of the present disclosure.

For example, FIG. 1B is a schematic diagram of an architecture of another communication system provided by the embodiments of the present disclosure. Please refer to FIG. 1B, which includes a terminal device 1101 and a satellite 1102, the wireless communication may be performed between the terminal device 1101 and the satellite 1102. The network formed between the terminal device 1101 and the satellite 1102 may also be referred to as an NTN. In the architecture of the communication system illustrated in FIG. 1B, the satellite 1102 may have functions of a base station, and the terminal device 1101 and the satellite 1102 may communicate directly with each other. In the system architecture, the satellite 1102 may be referred to as a network device. In some embodiments of the present disclosure, the communication system may include multiple network devices 1102, and there may be other numbers of terminal devices within the coverage area of each network device 1102, which is not limited in the embodiments of the present disclosure.

For example, FIG. 1C is a schematic diagram of an architecture of yet another communication system provided by the embodiments of the present disclosure. Please refer to FIG. 1C, which includes a terminal device 1201, a satellite 1202 and a base station 1203, the wireless communication may be performed between the terminal device 1201 and the satellite 1202, and the satellite 1202 and the base station 1203 may communicate with each other. The network formed between the terminal device 1201, the satellite 1202 and the base station 1203 may also be called an NTN. In the architecture of the communication system illustrated in FIG. 1C, the satellite 1202 may not have the functions of a base station, and the communication between the terminal device 1201 and the base station 1203 needs to be relayed through the satellite 1202. In this system architecture, the base station 1203 may be called a network device. In some embodiments of the present disclosure, the communication system may include multiple network devices 1203, and there may be other numbers of terminal devices within the coverage area of each network device 1203, which is not limited in the embodiments of the present disclosure.

It should be noted that FIGS. 1A to 1C are only examples of the system to which the present disclosure is applicable. Of course, the method shown in the embodiments of the present disclosure may also be applied to other systems, such as a 5G communication system, an LTE communication system, or the like, which is not limited in the embodiments of the present disclosure.

In some embodiments of the present disclosure, the wireless communication system illustrated in FIGS. 1A to 1C may further include other network entities such as a mobility management entity (MME), and an access and mobility management function (AMF), which is not limited in the embodiments of the present disclosure.

It should be understood that a device having communication functions in a network/system in the embodiments of the present disclosure may be referred to as a communication device. Taking the communication system 100 illustrated in FIG. 1A as an example, the communication devices may include a network device 110 and a terminal device 120 with communication functions, the network device 110 and the terminal device 120 may be the specific devices described above, which will not be repeated herein; the communication device may further include other devices in the communication system 100, such as a network controller, a mobile management entity and other network entities, which are not limited in the embodiments of the present disclosure.

## 5G application scenarios

At present, with people's pursuit of data rates, latency, high-speed mobility, energy efficiency, and the diversity and complexity of services in future life, the 3rd generation partnership project (3GPP) international standard organization has begun to research and develop 5G. The main application scenarios for 5G are: enhanced mobile broadband (eMBB), ultra-reliable low latency communications (URLLC), and massive machine type communications (mMTC).

In an aspect, eMBB still aims to enable users to obtain multimedia content, services, and data, and demand thereof is growing very rapidly. In addition, since eMBB may be deployed in different scenarios, such as indoor, urban areas, and rural areas, capabilities and requirements of the eMBB vary greatly. Therefore, it cannot be generalized and must be analyzed in detail based on specific deployment scenarios.

A key feature of URLLC is low latency. In this scenario, the connection latency may be 1 millisecond or less, and high-reliability connections in high-speed mobility situations may be supported. For example, in a case of moving at a speed of 500 km/h, the reliability may reach 99.999%. Typical applications of URLLC include industrial automation, power automation, remote medical operations (surgery), traffic safety, etc.

Typical features of mMTC include: high connection density, small data volumes, latency-insensitive services, low module cost and long service life, etc. Based on this, mMTC may include one or more of the following communications: communication in industrial wireless sensor networks, communication in video surveillance scenarios, or communication between wearable devices.

## Radio resource control (RRC) state

At present, the protocol defines three RRC states for a terminal device: RRC_CONNECTED state, RRC_IDLE state, and RRC_INACTIVE state.

The RRC_CONNECTED state may refer to a state in wherethe terminal device resides after completing the random access procedure but before performing RRC release. There is an RRC connection between the terminal device and the network device, and there is a terminal device access stratum (AS) context between the network device and the terminal device. In the RRC_CONNECTED state, the terminal device may perform data transmission with the network device, such as downlink data transmission and/or uplink data transmission. Alternatively, the terminal device may also transmit a specific data channel and/or control channel of the terminal device with the network device, to transmit specific information or unicast information of the terminal device.

In the RRC_CONNECTED state, the network device may determine cell-level location information of the terminal device, that is, the network device may determine a cell to which the terminal device belongs. In addition, the mobility management of the terminal device in the RRC_CONNECTED state may be controlled by the network device, that is, the mobility of the terminal device in the RRC_CONNECTED state is the mobility controlled by the network device.

The RRC_IDLE state refers to a state in which the terminal device resides in a case where the terminal device is camped in a cell, but does not perform random access. The terminal device usually enters the RRC_IDLE state after being powered on or after RRC release. In the RRC_IDLE state, there is no RRC connection between the terminal device and the network device, the network device does not store the AS context of the terminal device, and no connection for the terminal device is established between the network device and a core network. In a case where the terminal device needs to enter the RRC_CONNECTED state from the RRC_IDLE state, the RRC connection establishment process needs to be initiated.

In the RRC_IDLE state, the core network (CN) may transmit a paging message to the terminal device, that is, the paging process may be triggered by the CN. Optionally, a paging area may also be configured by the CN. The mobility management of the terminal device in the RRC_IDLE state includes cell selection/cell reselection based on the terminal device.

The _RRC INACTIVE state is a new RRC state defined to reduce air interface signaling, quickly restore wireless connections, and quickly resume data services. The RRC_INACTIVE state is a state between the RRC_CONNECTED state and the RRC_IDLE state (i.e., the _RRC INACTIVE state is different from the RRC_CONNECTED state and the RRC_IDLE state). The terminal device has previously entered the RRC_CONNECTED state and then released the RRC connection with the network device, but the network device has saved the AS context of the terminal device. In addition, the connection established between the network device and the core network for the terminal device is not released, that is, a user plane bearer and a control plane bearer between the RAN and CN are still maintained, that is, there is a connection between CN and NR.

In the _RRC INACTIVE state, the RAN may transmit a paging message to the terminal device, that is, the paging process may be triggered by the RAN. The RAN-based paging area is managed by the RAN, and the network device can know that the location of the terminal device is based on the RAN paging area level. The mobility management of the terminal device in the _RRC INACTIVE state includes cell selection/cell reselection based on the terminal device.

## NTN

At present, the 3rd generation partnership project (3GPP) is researching NTN technology. NTN generally provides communication services to ground users using the satellite communication manner. Compared with terrestrial communication networks (e.g., terrestrial cellular network communications), satellite communication has many unique advantages.

First, satellite communication is not limited by the geographical location of the user. For example, general terrestrial communication networks cannot cover areas such as oceans, mountains, deserts, and the like where network devices cannot be set up. Alternatively, the terrestrial communication networks cannot cover certain areas that are not covered due to sparse population. As for satellite communication, since a satellite can cover a larger ground area and can orbit the Earth, theoretically, every corner of the Earth can be covered by the satellite communication network.

Second, satellite communication has significant social value. Satellite communication may cover remote mountainous areas, poor and backward countries or regions at a relatively low cost, thereby enabling people in these areas to enjoy advanced voice communication and mobile Internet technologies. From this perspective, satellite communication is conducive to narrowing the digital divide with developed regions, and promoting the development of these regions.

Third, satellite communication has a long range, and the communication cost does not increase significantly with the increase of communication range.

Finally, satellite communication is highly stable and not affected by natural disasters.

Communication satellites may be classified into LEO satellites, MEO satellites, GEO satellites, HEO satellites, and the like, according to their orbital altitudes. At this stage, the main research is on the LEO satellites and GEO satellites.

The altitude range of the LEO satellites is generally between 500 km and 1500 km. Correspondingly, the orbital period of the LEO satellites is approximately 1.5 hours to 2 hours. For the LEO satellites, the signal propagation delay for single-hop communication between users is generally less than 20 ms. The maximum satellite visibility time corresponding to the LEO satellites is about 20 minutes. The LEO satellites have the advantages of short signal propagation distance, low link loss, and low transmission power requirements for terminal devices.

The orbital altitude of the GEO satellites is approximately 35,786 km. The orbital period of the GEO satellites is approximately 24 hours. For the GEO satellites, the signal propagation delay for single-hop communication between users is generally about 250 ms.

In order to ensure satellite coverage and improve the system capacity of the entire satellite communication system, satellites usually employ multiple beams to cover the ground area. Therefore, a satellite can form dozens or even hundreds of beams to cover the ground area. A beam of a satellite may cover a ground area with a diameter of tens to hundreds of kilometers.

At present, NTN systems may include NR NTN systems and IoT NTN systems.

## NTN Network Architecture

The NTN network architecture may include the following network elements: a gateway, a feeder link, a service link, and a satellite.

The NTN network architecture may include one or more gateways, which may be used to connect satellites and terrestrial public networks.

The feeder link may refer to a link for communication between a gateway and a satellite.

The service link may refer to a link for communication between a terminal device and a satellite.

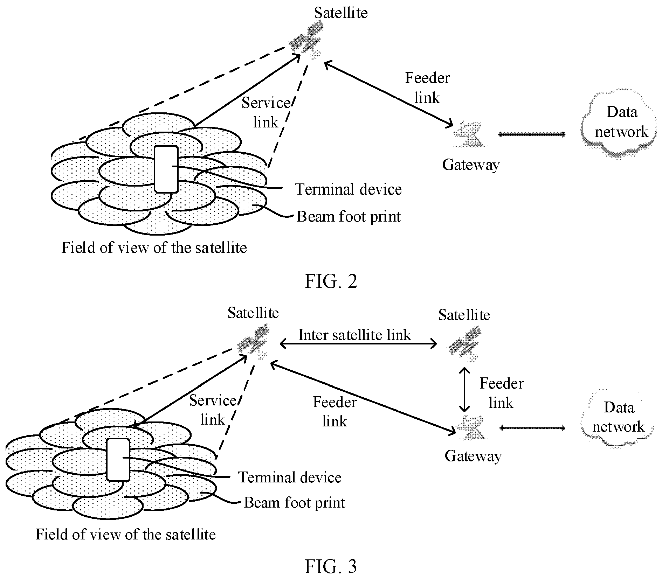

In terms of the functions provided by satellites, satellites may be classified into satellites with transparent payload and satellites with regenerative payload. The satellite with transparent payload means that the satellite only provides the functions of wireless frequency filtering, frequency conversion and amplification. In other words, the satellite with transparent payload only provides transparent forwarding of a signal and does not change the waveform of the forwarded signal. The satellite with regenerative payload refers to a satellite that, in addition to providing the functions of wireless frequency filtering, frequency conversion and amplification, may further provide one or more of the following functions: demodulation, decoding, routing, conversion, encoding, modulation, or the like. The satellite with regenerative payload may have some or all of the functions of a base station. According to the different functions provided by satellites in NTN networks, the NTN network architecture may be classified into the NTN network architecture with transparent payload and the NTN network architecture with regenerative payload. FIGS. 2 and 3 respectively provide example diagrams of the NTN network architecture with transparent payload and the NTN network architecture with regenerative payload.

In some embodiments, the NTN network architecture may further include an inter satellite link (ISL). For example, the NTN network architecture with regenerative payload may include an inter satellite link.

## Timing advance (TA)

An important feature of uplink transmission is orthogonal multiple access of different terminal devices in time and frequency, that is, uplink transmissions from different terminal devices in the same cell do not interfere with each other. To ensure the orthogonality of uplink transmissions and avoid intra-cell interference, the network device requires that arrival times of signals from different terminal devices at the same time but with different frequency domain resources are basically aligned. To ensure time synchronization on the network device side, the communication system (e.g., LTE/NR) may support an uplink TA mechanism.

In a communication system supporting uplink TA, the uplink clock and the downlink clock on the network device side are the same, while there is an offset between the uplink clock and the downlink clock on the terminal device side, and different terminal devices have different uplink TA amounts. By properly controlling the offset of each terminal device, the network device may control the time when uplink signals from different terminal devices arrive at the network device. For terminal devices that are farther away from the network device, due to the larger transmission delay, they are required to transmit uplink data earlier than terminal devices that are closer to the network device.

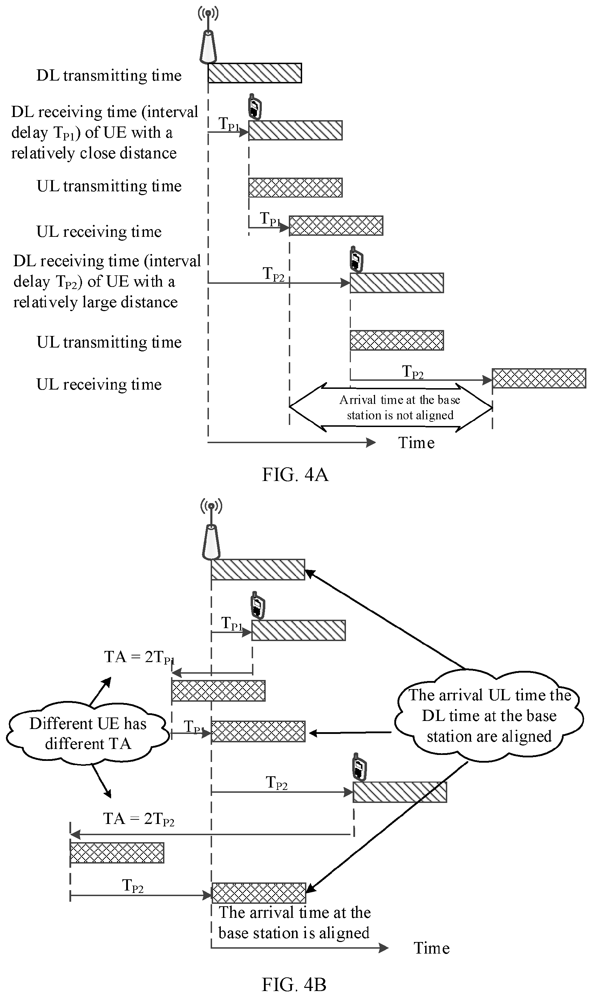

FIG. 4A and FIG. 4B respectively illustrate the time delay of the uplink signal reaching the network device in the absence of TA and the time delay of the uplink signal reaching the network device in the presence of TA. As illustrated in FIG. 4A, in the absence of the TA, uplink signals transmitted from different terminal devices (e.g., terminal devices at different distances from the network device) arrive at the network device at different times, which may cause intra-cell interference. After the introduction of TA, see FIG. 4B, different terminal devices are configured with different uplink TAs, so that uplink signals transmitted from different terminal devices arrive at the network device at the same time, thereby helping to avoid the intra-cell interference.

The network device may determine the TA value of each terminal device by measuring the uplink transmission of the terminal device. The network device may transmit a TA command to the terminal device to inform the terminal device of TA value corresponding to the terminal device. For example, the network device may transmit the TA command to the terminal device in two manners, as follows:

Manner I: Acquisition of an initial TA: During the random access procedure, the network device may determine the TA value by measuring a received preamble, and transmit the TA value to the terminal device through a timing advance command (Timing Advance Command) field of the random access response (RAR) message.

Manner II: Adjustment of TA in RRC_CONNECTED state: Although the terminal device and the network device achieve uplink synchronization during the random access procedure, the timing of an uplink signal reaching the network device may change over time. Therefore, the terminal device needs to continuously update its uplink TA amount to maintain uplink synchronization. In a case where the TA of a terminal device needs to be corrected, the network device may transmit a TA command (Timing Advance Command) to the terminal device, to request the terminal device to adjust the uplink timing. In some implementations, the TA command is transmitted from the network device to the terminal device through a media access control control element (MAC CE), this MAC CE may also be referred to as a TA command MAC CE (i.e., an MAC CE carrying a TA command).

In a CA scenario, the terminal device may need to use different TAs for different uplink carriers. Therefore, the timing advance group (TAG) is introduced in the standard. The network device may configure up to 4 TAGs for each cell group of the terminal device, and meanwhile, configure a TAG associated with a service group for each service cell. In some implementations, the terminal device may maintain a TA for each TAG separately.

## Timing relationship in the NTN system

In the TN system (e.g., the NR system), the propagation delay of signal communication is usually less than 1 ms. In the NTN system, due to the long communication distance between terminal devices and satellites (or network devices), the propagation delay of signal communication is very large, ranging from tens of milliseconds to hundreds of milliseconds, which is related to the satellite orbit altitude and the type of satellite communication service. Therefore, in order to handle the relatively large propagation delay, the timing relationship in the NTN system needs to be enhanced compared to the NR system.

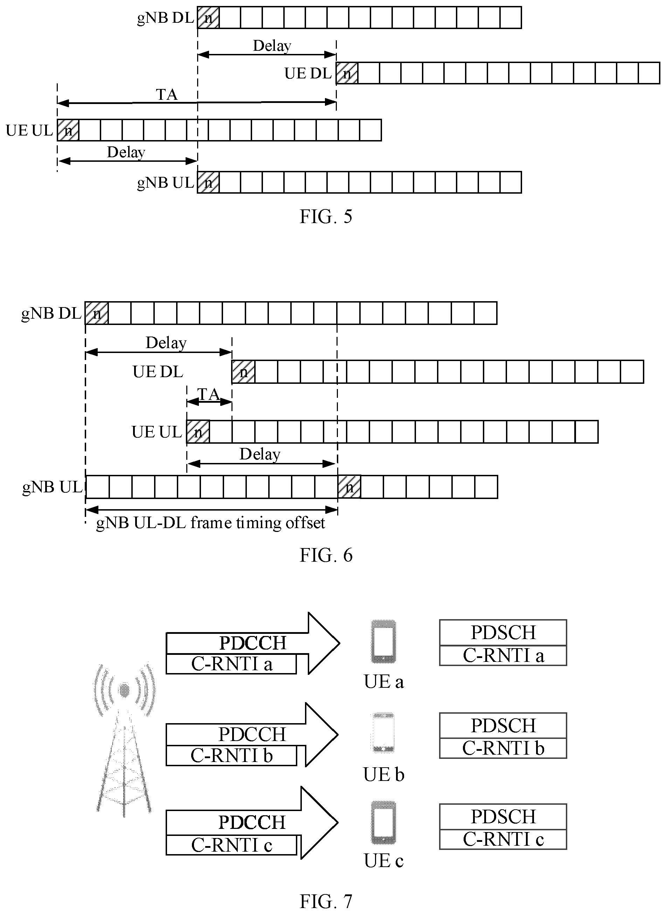

Like the NR system, in the NTN system, the terminal device needs to consider the impact of TA upon performing uplink transmission. In the NTN system, in a case where a terminal device is scheduled to perform uplink transmission in slot n, the terminal device takes into account the round-trip propagation delay and transmits in advance during the uplink transmission, thereby ensuring that an uplink signal can arrive at the network device in slot n on the network device side. Since the propagation delay in the NTN system is relatively large, the range of TA values is also relatively large. Specifically, the timing relationship in the NTN system may include two cases, as illustrated in FIGS. 5 and 6 below, respectively.

Case I: As illustrated in FIG. 5, the downlink slot and uplink slot on the network device side are aligned. Accordingly, in order to align the uplink transmission of the terminal device with the uplink slot on the network device side, the terminal device needs to use a relatively large TA value. Therefore, during uplink transmission, a large offset (or an offset amount, an offset parameter, etc.) needs to be introduced into the system. For example, the offset may be represented by $K_{offset}$.

Case II: As illustrated in FIG. 6, there is an offset between the downlink slot and the uplink slot on the network device side. In this case, if the uplink transmission of the terminal device and the uplink slot on the network device side are needed to be aligned, the terminal device only needs a relatively small TA value. However, in the case II, the network device may require additional scheduling to handle the corresponding scheduling timing, which is more complex.

**Timing relationship in the NR system**

In the NR system, there are many communication processes with timing relationships. The timing relationships in several communication processes in the NR system are illustratively introduced below.

PDSCH reception timing: in a case where a terminal device is scheduled (e.g., scheduled by downlink control information (DCI)) to receive a PDSCH, indication information of $K_0$ is included in scheduling information (e.g., DCI), where $K_0$ is used to determine a time domain unit (e.g., slot) for transmitting the PDSCH. The following description takes the time domain unit as a slot as an example, but the time domain unit may also be other time domain units other than the slot, such as a subframe, a symbol, or the like. For example, in a case where the terminal device receives the scheduling information on slot n, then a slot allocated to the terminal device for PDSCH transmission is slot $\left\lfloor n \cdot \frac{2^{\mu_{PDSCH}}}{2^{\mu_{PDCCH}}} \right\rfloor + K_0$, where $K_0$ is determined according to a subcarrier spacing of the PDSCH, and $\mu_{PDSCH}$ and $\mu_{PDCCH}$ are used to determine as a subcarrier spacing configured for a PDSCH and a subcarrier spacing configured for a PDCCH respectively, a value range of $K_0$ being 0 to 32.

Transmission timing for a physical uplink shared channel (PUSCH) scheduled by DCI: in a case where the terminal device is scheduled by DCI to transmit a PUSCH, indication information of $K_2$ is included in the DCI, where $K_2$ is used to determine the slot for transmitting the PUSCH. For example, in a case where the terminal device receives the scheduling DCI on slot n, then a slot allocated to the terminal device for PUSCH transmission is slot $\left\lfloor n \cdot \frac{2^{\mu_{PUSCH}}}{2^{\mu_{PDCCH}}} \right\rfloor + K_2$, where $K_2$ is determined according to a subcarrier spacing of the PUSCH, and $\mu_{PUSCH}$ and $\mu_{PDCCH}$ are used to determine as a subcarrier spacing configured for a PUSCH and a subcarrier spacing configured for a PDCCH respectively, a value range of $K_2$ being 0 to 32.

Transmission timing for a PUSCH scheduled by random access response (RAR) grant: for a slot for PUSCH transmission scheduled by RAR grant, in a case where the terminal device initiates physical random access channel (PRACH) transmission, and an end position of a PDSCH including the RAR grant message received by the terminal device is on slot n, then the terminal device may transmit the PUSCH scheduled by RAR grant on the slot $n + K_2 + \Delta$, where $K_2$ and $\Delta$ are agreed upon by a protocol.

Transmission timing for transmitting HARQ feedback information on a physical uplink control channel (PUCCH): for a slot for PUCCH transmission, in a case where an end position of a PDSCH reception is on slot n or an end position of a PDCCH reception indicating a semi-persistent scheduling (SPS) PDSCH release is on slot n, then the terminal device should transmit corresponding HARQ feedback information (e.g., HARQ-ACK information) on a PUCCH resource within a slot $n + K_1$, where $K_1$ is a number of slots. As an implementation, $K_1$ may be indicated through a *PDSCH-to-HARQ-timing-indicator* information field in a DCI format, or may be provided through a *dl-DataToUL-ACK* parameter. It should be noted that, in a case of $K_1 = 0$, the last slot of PUCCH transmission overlaps with the slot of PDSCH reception or PDCCH reception indicating SPS PDSCH release.

Medium access control control element (MAC CE) activation timing: in a case where HARQ feedback information corresponding to a PDSCH including an MAC CE command is transmitted on a slot n, corresponding behaviors indicated by the MAC CE command and downlink configuration assumed by the terminal device should take effect from the first slot after a slot $n + 3N_{slot}^{subframe,\mu}$, where $3N_{slot}^{subframe,\mu}$ represents a number of slots included in each subframe in a case where the subcarrier spacing is configured as $\mu$.

Channel state information (CSI) transmission timing on a PUSCH: the CSI transmission timing on PUSCH is the same as the transmission timing for a PUSCH transmission scheduled by DCI in general.

CSI reference resource timing: a CSI reference resource for reporting CSI in an uplink slot n' is determined based on a single downlink slot $n - n_{CSI\_ref}$, where $n = \left\lfloor n' \cdot \frac{2^{\mu_{DL}}}{2^{\mu_{UL}}} \right\rfloor$, where $\mu_{DL}$ and $\mu_{UL}$ are a subcarrier spacing configuration for downlink and a subcarrier spacing configuration for uplink, respectively. A value of $n_{CSI\_ref}$ depends on a type of CSI reporting.

Aperiodic sounding reference signal (SRS) transmission timing: in a case where a terminal device receives an aperiodic SRS triggered by DCI on a slot n, the terminal device may transmit the aperiodic SRS in each triggered SRS resource set in a slot $\left\lfloor n \cdot 2^{\frac{\mu_{SRS}}{\mu_{PDCCH}}} \right\rfloor + k$, where $k$ may be configured through a higher layer parameter *slotOffset* in each triggered SRS resource set, k is determined according to a subcarrier spacing corresponding to the triggered SRS transmission, and $\mu_{SRS}$ and $\mu_{PDCCH}$ are a subcarrier spacing configuration of the triggered SRS transmission and a subcarrier spacing configuration of a PDCCH carrying a trigger command, respectively.

## Timing enhancement in the NTN system

PDSCH reception timing in the NTN system is only affected by the timing of the downlink receiving side, and is not affected by the large transmission round-trip time in the NTN system. Therefore, the PDSCH reception timing relationship in the NR system may be reused in the NTN system.

For other timings affected by the interaction between downlink reception and uplink transmission, in order to work properly in the NTN system, or to overcome the large transmission delay in the NTN system, the timing relationship in the NTN system needs to be enhanced. A simple solution is to introduce an offset into the system. This offset may be represented by $K_{offset}$. This offset may then be applied to the relevant timing relationships.

In some embodiments, the offset may be a cell common offset broadcast by the network device. In some embodiments, the network device may further configure an offset dedicated to the terminal device for the terminal device. In some embodiments, in a case where the network device does not configure the offset dedicated to the terminal device for the terminal device, the terminal device may use the cell common offset.

In some embodiments, the network device may refer to the TA upon configuring the offset. For example, the cell common offset broadcast by the network device may be configured according to the maximum TA supported in the cell. Alternatively, the offset dedicated to the terminal device may be configured according to the TA of the terminal device.

Like the NR system, there are also many communication processes with timing relationships in the NTN system. The timing relationships of several communication processes in the NTN system are illustratively below.

Transmission timing for a PUSCH scheduled by DCI (including CSI transmitted on the PUSCH): in a case where the terminal device receives the scheduling DCI on slot n, a slot allocated to the terminal device for PUSCH transmission is slot $\left\lfloor n \cdot \frac{2^{\mu_{PUSCH}}}{2^{\mu_{PDCCH}}} \right\rfloor + K_2 + K_{offset}$.

Transmission timing for a PUSCH scheduled by RAR grant: for a slot for PUSCH transmission scheduled by RAR grant, the terminal device may transmit the PUSCH on the slot $n + K_2 + \Delta + K_{offset}$.

Transmission timing for transmitting HARQ feedback information on a PUCCH: for a slot for PUCCH transmission, the terminal device may transmit corresponding HARQ feedback information on a PUCCH resource within a slot $n + K_1 + K_{offset}$.

MAC CE activation timing: in a case where HARQ feedback information corresponding to a PDSCH including an MAC CE command is transmitted on a slot n, corresponding behaviors indicated by the MAC CE command and downlink configuration assumed by the terminal device may take effect from the first slot after a slot $n + XN_{slot}^{subframe,\mu} + K_{offset}$ where X may be determined based on capabilities of the terminal device in the NTN, and its value may not be 3.

CSI reference resource timing: a CSI reference resource for reporting CSI on an uplink slot n' may be determined based on a single downlink slot n - $n_{CSI_{ref}}$ - $K_{offset}$.

Aperiodic SRS transmission timing: in a case where the terminal device receives an aperiodic SRS triggered by DCI on a slot n, the terminal device may transmit the aperiodic SRS in each triggered SRS resource set on a slot $\left\lfloor n \cdot 2^{\frac{\mu_{SRS}}{\mu_{PDCCH}}} \right\rfloor + k + K_{offset}$.

## MBS

Traditional video software transmits data content in a unicast form. Therefore, in a case where there are too many users, the network will be overwhelmed and congestion will occur. In other words, in a case where multiple users in a wireless cell are watching video content simultaneously, the wireless downlink rate may become a bottleneck. As a possible implementation, in a case where multiple users in a wireless cell are watching video content simultaneously, the video content may be broadcasted within the wireless cell to ensure smooth viewing for the users.

Therefore, in order to achieve network resource sharing and improve resource utilization, some communication systems (e.g., the NR system) have introduced MBS. MBS is a service for multiple terminal devices, such as a television broadcasting service, a live broadcasting service, a public safety service, and a batch software update service. The introduction (or development) of MBS enables multimedia content to be transmitted to terminal devices via broadcast or multicast, to allow users to watch TV broadcast programs or receive data push services anytime and anywhere.

MBS is called slightly differently depending on the connection state (RRC status) of the terminal device receiving the MBS. For example, in the physical layer design of Rel-17 NR MBS, the name of MBS is slightly different.

In some implementations, multicast refers to a network transmitting a MBS service to a group of terminal devices in connected state. Accordingly, the network device may transmit a group common PDCCH to schedule a group common PDSCH. In a multicast service, a group common PDCCH may mean that the PDCCH is scrambled using a group radio network temporary identifier (G-RNTI) or a group-configured scheduling RNTI (G-CS-RNTI), or that the CRC in the PDCCH is scrambled using a G-RNTI or G-CS-RNTI.

In some implementations, broadcast refers to the network transmitting the MBS service to terminal devices within coverage. The terminal devices within the coverage of the network may be terminal devices in the connected state or a non-connected state (e.g., RRC_IDLE STATE or _RRC INACTIVE state). Accordingly, the network device may transmit a group common PDCCH to schedule a group common PDSCH. In a broadcast service, a group common PDCCH may mean that the PDCCH is scrambled using a multicast control channel RNTI (MCCH-RNTI) or a G-RNTI, or that the CRC in the PDCCH is scrambled using the MCCH-RNTI or the G-RNTI.

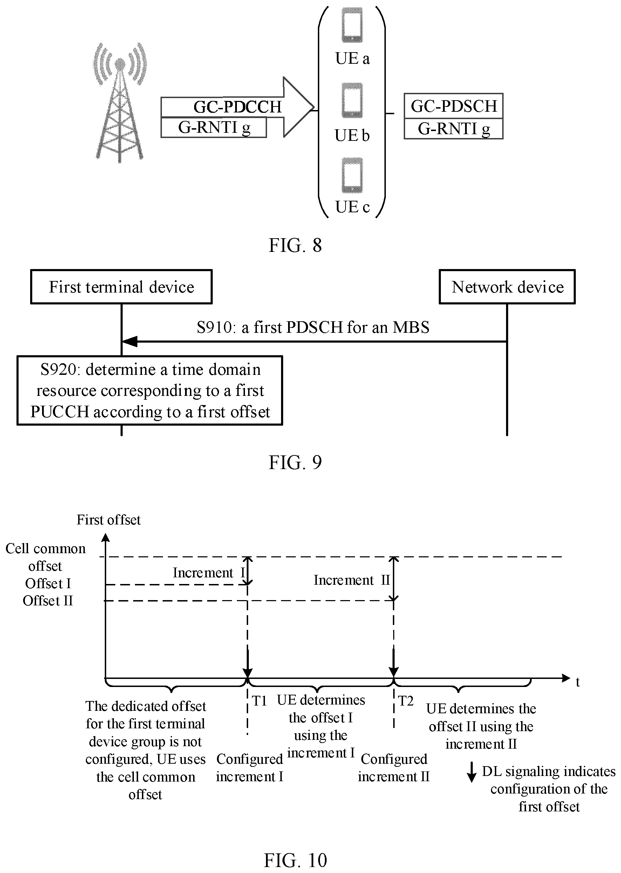

For terminal devices in the connected state, MBS multicast scheduling (PDSCH scheduling of MBS) may support different transmission modes (or transmitting modes), or, MBS may support different transmission modes. Taking the NR system as an example, MBS multicast scheduling may support a point to point (PTP) transmission mode and a point to multi-point (PTM) transmission mode. The MBS transmission modes are introduced in conjunction with FIG. 7 and FIG. 8 below.

FIG. 7 illustrates an exemplary diagram of a PTP transmission mode of the MBS. As illustrated in FIG. 7, for a terminal device in the connected state (e.g., a terminal device A), the network device may transmit a dedicated PDCCH to the terminal device, the dedicated PDCCH is used to indicate a dedicated PDSCH for the terminal device. In some implementations, the dedicated PDCCH for the terminal device may mean that the PDCCH (or a CRC of the PDCCH) is scrambled using a dedicated RNTI (e.g., C-RNTI) of the terminal device. In addition, the PDSCH indicated by the dedicated PDCCH may be scrambled using the same dedicated RNTI of the terminal device. In some embodiments, the PTP transmission mode may only be used as a transmission mode of retransmission in the MBS.

FIG. 8 illustrates an exemplary diagram of a PTM transmission mode of the MBS. As illustrated in FIG. 8, for a group of terminal devices in the connected state (e.g., a terminal device A, a terminal device B, and a terminal device C), the network device may transmit a group common PDCCH to the group of terminal devices, where the group common PDCCH is used to schedule a group PDSCH. In some embodiments, the group common PDCCH may mean that the PDCCH (or the CRC of the PDCCH) is scrambled using a group common RNTI. In addition, the PDSCH scheduled by the group common PDCCH is scrambled using the same group common RNTI.

During MBS retransmission, the network device may configure different HARQ feedback modes for the terminal device. For example, the network device may configure two HARQ feedback modes for the terminal device in the connected state, namely, a first HARQ feedback mode (ACK/NACK mode) and a second HARQ feedback mode (NACK-only mode).

As an implementation, in a case where the network device configures the first HARQ feedback mode for the terminal device, the network device may schedule an initial transmission of a transport block (TB) for a group of terminal devices through the PTM transmission mode. Afterwards, the network device may schedule the retransmission of this TB using the PTM transmission mode or the PTP transmission mode according to the feedback of each terminal device in this group of terminal devices (including feedback of ACK, feedback of NACK, or no feedback of any information).

As another implementation, in a case where the network device configures the second HARQ feedback mode for the terminal device, the network device may schedule the initial transmission of a TB for a group of terminal devices through the PTM transmission mode. Afterwards, in a case where at least one terminal device in the group of terminal devices feeds back a NACK, the network device may schedule the retransmission of the TB using the PTM transmission mode.

As mentioned above, some communication systems (e.g., the NTN system) may have large delays. In order to adapt to the large delay of terminal devices, such communication systems usually introduce an offset (e.g., $K_{offset}$) to enhance the timing relationship affected by the interaction between downlink reception and uplink transmission. As a possible implementation, some communication systems with large delays (e.g., the NTN system) may support the MBS. In this case, for the PDSCH reception for the MBS, in a case where the network side configures the HARQ feedback, the timing of the HARQ feedback of the PDSCH reception for the MBS also needs to be enhanced. Therefore, how to enhance the timing of HARQ feedback of PDSCH reception for the MBS is a problem that needs to be solved.

In response to the above problems, the embodiments of the present disclosure provide a wireless communication method, a terminal device and a network device, which can help the terminal device and the network device determine an offset corresponding to the HARQ feedback of PDSCH reception for the MBS, thereby ensuring that the HARQ feedback of the PDSCH reception for the MBS can be transmitted successfully, and improving the reliability of MBS service transmission. The method embodiments of the present disclosure are introduced in conjunction with the accompanying drawings below.

The technical solutions provided by the embodiments of the present disclosure may be applied to scenarios or communication systems with large delays. For example, the embodiments of the present disclosure may be applied to the NTN system, but the embodiments of the present disclosure are not limited thereto. The embodiments of the present disclosure may also be applied to the TN system, such as some scenarios in the TN system where there is a large delay.

FIG. 9 is an exemplary flowchart of a wireless communication method provided by the embodiments of the present disclosure. The method illustrated in FIG. 9 is introduced from the perspective of interaction between a first terminal device and a network device. The first terminal device may be, for example, the terminal device 120, the terminal device 1101, or the terminal device 1201 illustrated in FIG. 1A to FIG. 1C. The network device may be, for example, the network device 110, the satellite 1102, or the network device 1203 illustrated in FIG. 1A to FIG. 1C. The method illustrated in FIG. 9 may include step S910 and step S920, which are described below.

In step S910, the network device transmits a first PDSCH for an MBS to a first terminal device.

In some embodiments, the first PDSCH for the MBS may be understood as the first PDSCH being used to transmit the MBS, or, the first PDSCH carries information related to the MBS. For example, the first PDSCH may be used to transmit MBS data, or the first PDSCH carries MBS data.

In some embodiments, the network device may configure the first terminal device to feed back HARQ feedback information of the first PDSCH for the MBS. That is to say, the first terminal device, after receiving the first PDSCH, may transmit HARQ feedback information corresponding to the first PDSCH to the network device.

In some embodiments, the HARQ feedback information corresponding to the first PDSCH may be carried on a first PUCCH. In other words, the first PUCCH may be used to carry the HARQ feedback information corresponding to the first PDSCH. However, the present disclosure is not limited thereto. As a possible implementation, the HARQ feedback information corresponding to the first PDSCH may be carried on a PUSCH. In other words, some PUSCHs may also be used to carry the HARQ feedback information corresponding to the first PDSCH.

The embodiments of the present disclosure do not limit the HARQ feedback mode corresponding to the first terminal device, or, the embodiments of the present disclosure do not limit the HARQ feedback mode configured by the network device for the first terminal device. For example, the HARQ feedback mode corresponding to the first terminal device may be a first HARQ feedback mode (an ACK/NACK mode), or the HARQ feedback mode corresponding to the first terminal device may be a second HARQ feedback mode (an NACK-only mode).

In some embodiments, the HARQ feedback mode corresponding to the first terminal device may be understood as a HARQ feedback mode corresponding to the first PDSCH, or the HARQ feedback mode corresponding to the first terminal device may be understood as a HARQ feedback mode configured by the network device for the first PDSCH of the first terminal device.

In some embodiments, in a case where the HARQ feedback mode corresponding to the first PDSCH is the first HARQ feedback mode, subsequently, the network device may, according to a feedback situation of the first terminal device (e.g., feedback of ACK, feedback of NACK, or no feedback of any information), adopt a PTM transmission mode or a PTP transmission mode to schedule a retransmission of a TB where the first PDSCH is located.

In some embodiments, in a case where the HARQ feedback mode corresponding to the first PDSCH is the second HARQ feedback mode, subsequently, the network device may adopt the PTM transmission mode to schedule the retransmission of the TB where the first PDSCH is located if the network device receives NACK information fed back by the first terminal device.

The embodiments of the present disclosure do not specifically limit the HARQ feedback information corresponding to the first PDSCH. For example, the HARQ feedback information corresponding to the first PDSCH may include HARQ-ACK information and/or HARQ-NACK information. Taking the HARQ feedback information corresponding to the first PDSCH carried on the first PUCCH as an example, the first PUCCH may carry the HARQ-ACK information, and may also carry the HARQ-NACK information.

In step S920, the first terminal device determines a time domain resource corresponding to the first PUCCH according to a first offset.

In some embodiments, the first terminal device determining the time domain resource corresponding to the first PUCCH according to the first offset, may be understood as that the first terminal device determines a time domain resource carrying the HARQ feedback information corresponding to the first PDSCH based on the first offset. In other words, the first terminal device determining the time domain resource corresponding to the first PUCCH according to the first offset, may be understood as that the first offset is used to determine a time domain resource position for the first terminal device to transmit the HARQ feedback information corresponding to the first PDSCH.

The embodiments of the present disclosure do not limit a granularity (unit) of time domain resources. The time domain resource mentioned in the embodiments of the present disclosure may refer to, for example, one of a frame, a subframe, a slot, or a symbol. Of course, the time domain resource mentioned in the embodiments of the present disclosure may also be, for example, a time domain resource in future communication systems. Taking the time domain resource as a slot as an example, the first terminal device may determine a slot for transmitting the HARQ feedback information corresponding to the first PDSCH according to the first offset, or, the first terminal device may determine a slot for transmitting the first PUCCH according to the first offset.

As described above, in some embodiments, the first PUCCH is used to carry the HARQ feedback information corresponding to the first PDSCH, the following description will all take the HARQ feedback information corresponding to the first PDSCH carried on the first PUCCH as an example. However, the present disclosure is not limited thereto. For example, in a case where the HARQ feedback information corresponding to the first PDSCH is carried on the PUSCH, the first terminal device may determine a time domain resource corresponding to the PUSCH according to the first offset.

In some embodiments, for the network device, the network device also needs to determine the time domain resource carrying the HARQ feedback information corresponding to the first PDSCH, so as to receive the HARQ feedback information transmitted from the first terminal device on the corresponding time domain resource. In other words, the network device also needs to determine the time domain resource corresponding to the first PUCCH, so as to receive the first PUCCH transmitted from the first terminal device in the time domain resource corresponding to the first PUCCH.

That is to say, in the embodiments of the present disclosure, the network device may also determine the time domain resource carrying the HARQ feedback information corresponding to the first PDSCH according to the first offset, or determine the time domain resource corresponding to the first PUCCH according to the first offset.

In some embodiments, the first offset may be determined based on one or more of, or, the determination of the first offset may be related to one or more of: an offset dedicated to the first terminal device, an offset dedicated to a first terminal device group to which the first terminal device belongs, or a cell common offset.

That is to say, the time domain resource carrying the HARQ feedback information corresponding to the first PDSCH may be determined in the embodiments of the present disclosure based on one or more of the following factors: an offset dedicated to a terminal device, an offset dedicated to a terminal device group, or a cell common offset. In this way, the introduction of the first offset in the embodiments of the present disclosure can enhance the timing of HARQ feedback of PDSCH reception for the MBS, which is conducive to ensuring that the HARQ feedback of PDSCH reception for the MBS can be transmitted successfully, thereby improving the reliability of MBS service transmission.

In some embodiments, the first offset may be determined based on one of the above factors. For example, the first offset is determined based on the offset dedicated to the first terminal device group, or the first offset is determined based on the cell common offset, or the like.

In some embodiments, the first offset may be determined based on multiple (two or more) of the above factors. For example, the first offset is determined based on the offset dedicated to the first terminal device group and the offset dedicated to the first terminal device, or the first offset is determined based on the offset dedicated to the first terminal device group and the cell common offset, or the like.

In some embodiments, the first offset may be one or more of: the offset dedicated to the first terminal device, the offset dedicated to the first terminal device group, or the cell common offset. That is, in some embodiments, the first offset being determined based on the offset dedicated to the first terminal device, may be understood as that the first offset is the offset dedicated to the first terminal device. In some embodiments, the first offset being determined based on the offset dedicated to the first terminal device group, may be understood as that the first offset is the offset dedicated to the first terminal device group. In some embodiments, the first offset being determined based on the cell common offset, may be understood as that the first offset is the cell common offset.

In some embodiments, determination of the first offset is related to a transmission mode corresponding to the first PDSCH for the MBS, or, determination of the first offset is related to a transmission mode of the MBS.

In some embodiments, in a case where the first PDSCH is a PDSCH corresponding to the PTM transmission mode, the first offset may be determined based on the offset dedicated to the first terminal device group.

In some embodiments, the first PDSCH being the PDSCH corresponding to the PTM transmission mode, may be understood as that the first PDSCH is scrambled using a G-RNTI or a G-CS-RNTI. However, the embodiments of the present disclosure are not limited thereto. For example, the first PDSCH may further be scrambled using an MCCH-RNTI.

In some embodiments, in a case where the first PDSCH is a PDSCH corresponding to the PTP transmission mode, the first offset may be determined based on the offset dedicated to the first terminal device group.

In some embodiments, in a case where the first PDSCH is the PDSCH corresponding to the PTP transmission mode, the first offset may be determined based on the offset dedicated to the first terminal device.

In some embodiments, the first PDSCH is the PDSCH corresponding to the PTP transmission mode, may be understood as that the first PDSCH is scrambled using a C-RNTI or a CS-RNTI.

In some embodiments, in a scenario of HARQ retransmission corresponding to the MBS, the first PDSCH may be the PDSCH corresponding to the PTP transmission mode. In other words, in the scenario of HARQ retransmission corresponding to the MBS, the network device may adopt the PTP transmission mode to transmit the first PDSCH to the first terminal device.

In some embodiments, the determination of the time domain resource carrying the HARQ feedback information corresponding to the first PDSCH may further be related to other information in addition to the first offset. For example, the time domain resource carrying the HARQ feedback information corresponding to the first PDSCH may be determined based on the first offset and a first parameter, and the first parameter may be used to determine the time domain resource carrying the HARQ feedback information corresponding to the first PDSCH.

In some embodiments, the first parameter may be used to indicate an offset of a time domain resource, so that the first terminal device determines the time domain resource carrying the HARQ feedback information corresponding to the first PDSCH based on an end position of a first PDSCH reception and the first parameter. For example, the HARQ feedback information corresponding to the first PDSCH may be transmitted starting from $K+K_{offset}$ time domain resources after the end position of the first PDSCH reception, where K is a value of the first parameter and $K_{offset}$ is the first offset. Taking the time domain resource as a slot as an example, the first parameter may be used to indicate a slot offset, the value of the first parameter is K, the value of the first offset is $K_{offset}$, and the end position of the first PDSCH reception is a slot n, then the HARQ feedback information corresponding to the first PDSCH may be transmitted starting from an uplink resource (e.g., a PUCCH resource) on a slot $n+K+K_{offset}$.

In some embodiments, the first parameter is a K1 value corresponding to a transmission timing of the HARQ feedback information transmitted on the PUCCH mentioned above.

In some embodiments, the first parameter may be carried in a PDCCH. For example, the first parameter may be carried in a first PDCCH associated with the first PDSCH.

In some embodiments, the first parameter being carried in the PDCCH may mean that the first parameter is carried in the DCI. As an implementation, the first parameter may be indicated by a *PDSCH-to-HARQ-timing-indicator* information field in a DCI format. As another implementation, the first parameter may be provided through a *dl-DataToUL-ACK* parameter.

In some embodiments, the offset dedicated to the first terminal device may be configured by the network device. As an implementation, the offset dedicated to the first terminal device may be indicated by the network device through an MAC CE.

In some embodiments, the cell common offset may be configured by the network device. As an implementation, the cell common offset may be indicated by the network device through broadcasting.

In some embodiments, the offset dedicated to the first terminal device group may be configured by the network device. As an implementation, the offset dedicated to the first terminal device group may be configured by the network device based on a signaling dedicated to the first terminal device group. As another implementation, the offset dedicated to the first terminal device group may be configured by the network device based on the signaling dedicated to the first terminal device.

In some embodiments, the first offset may be configured by the network device. For example, the network device may configure the first offset for the first terminal device (e.g., in a case where the first terminal device is in the connected state). Taking the first offset being the offset dedicated to the first terminal device group as an example, the first offset may be configured by the network device through the signaling dedicated to the first terminal device group or the signaling dedicated to the first terminal device. However, the embodiments of the present disclosure are not limited thereto. In some embodiments, the first offset may also be pre-configured or pre-defined by a protocol.

As mentioned above, the first offset may be determined based on one or more of the offset dedicated to the first terminal device group, the offset dedicated to the first terminal device, or the cell common offset. The detailed introduction is given below to the determination of the first offset based on the offset dedicated to the first terminal device group and the determination of the first offset based on the cell common offset in conjunction with Embodiment I and Embodiment II.

**Embodiment I: the first offset is determined based on the offset dedicated to the first terminal device group.**

In the Embodiment I, the first offset may be, for example, the offset dedicated to the first terminal device group.

In the embodiments of the present disclosure, different terminal device groups may be associated with or correspond to different group identifiers. That is to say, the embodiments of the present disclosure may identify which terminal device group the terminal device belongs to through a group identifier corresponding to the terminal device.

In some embodiments, the first terminal device group may be associated with or correspond to a first group identifier. In other words, the first terminal device group may be indicated (or identified) by the first group identifier. In some embodiments, each terminal device in the first terminal device group is associated with or corresponds to the first group identifier.

In some embodiments, the first group identifier may be used to scramble a first PDSCH transmitted from each terminal device in the first terminal device group.

In some embodiments, the first group identifier may include a G-RNTI or a G-CS-RNTI. However, the embodiments of the present disclosure are not limited to thereto, as long as the first group identifier may be used to perform RNTI scrambling for a group of terminal devices. For example, in some embodiments, the first group identifier may include an MCCH-RNTI, or the like.

The embodiments of the present disclosure do not limit the configuration granularity of the first offset. The first offset may be configured for a group of terminal devices, or the first offset may be configured for multiple groups of terminal devices.

In some embodiments, the first offset may correspond to the first group identifier. That is to say, the embodiments of the present disclosure may configure respective offsets dedicated to terminal device groups for different terminal device groups. In other words, the offset dedicated to the terminal device group may correspond to the group identifier one by one, that is, the offset dedicated to the terminal device group may be configured for each group identifier. For example, the first offset corresponding to the first terminal device group may correspond to the first group identifier, and a second offset corresponding to a second terminal device group may correspond to a second group identifier.

In some embodiments, the first offset may correspond to multiple group identifiers. For example, the first offset may correspond to multiple group identifiers including the first group identifier. That is, the embodiments of the present disclosure may configure the same first offset for multiple terminal device groups (that is, the offset dedicated to the terminal device group), that is, the same first offset may be configured for multiple group identifiers. In other words, the offset dedicated to the terminal device group may have a one-to-many correspondence with the group identifier(s). For example, the first offset may correspond to both a first group identifier and a second group identifier, where the first group identifier is a group identifier corresponding to the first terminal device group, and the second group identifier is a group identifier corresponding to the second terminal device group. In other words, an offset dedicated to the terminal device group corresponding to the first terminal device group and an offset dedicated to the terminal device group corresponding to the second terminal device group may be the same.

In some embodiments, in a case where the first offset corresponds to multiple group identifiers, the network device may simultaneously indicate the multiple group identifiers corresponding to the first offset.

In some embodiments, in a case where the first terminal device is not configured with the first offset, the time domain resource carrying the HARQ feedback information corresponding to the first PDSCH (e.g., the time domain resource corresponding to the first PUCCH) may be determined based on the cell common offset. In other words, in some embodiments, for a certain terminal device group or for a group identifier corresponding to a certain terminal device group, in a case where the terminal device group or a group identifier corresponding to the terminal device group is not configured with an offset dedicated to the corresponding terminal device group, the first offset may be determined based on the cell common offset (e.g., using the cell common offset as the first offset).

In some embodiments, whether to configure the first offset is determined based on a condition. This condition may be related to the HARQ feedback corresponding to the first PDSCH.

For example, whether to configure the first offset may be determined based on a first condition, where the first condition may be associated with whether the HARQ feedback is enabled for the first group identifier, or, the first condition may be associated with whether the HARQ feedback is enabled for the first terminal device group.

In some embodiments, in a case where the HARQ feedback is enabled for the first group identifier (or for the first terminal device group), the first offset may be configured, that is, the first offset may be configured for the first terminal device or the first terminal device group. In other words, a first offset may be configured for the first group identifier (or first terminal device group) configured to enable the HARQ feedback.

In some embodiments, the first offset may be configured only in a case where the HARQ feedback is enabled for the first group identifier (or for the first terminal device group). In other words, only the first group identifier (or first terminal device group) configured to enable the HARQ feedback may be configured with the first offset.

In some embodiments, in a case where the HARQ feedback is not enabled for the first group identifier (or for the first terminal device group), the first offset may not be configured, that is, the first offset may not be configured for the first terminal device or the first terminal device group. In other words, the first offset cannot be configured for the first group identifier (or first terminal device group) configured to disable the HARQ feedback.

As mentioned above, the first offset may be configured by the network device. The embodiments of the present disclosure do not limit the manner in which the network device configures the first offset. The several exemplary methods for configuring the first offset are introduced below.

As an implementation, the first offset may be configured based on a first signaling. The first signaling may be a signaling dedicated to the first terminal device.

The embodiments of the present disclosure do not limit the signaling dedicated to the first terminal device. For example, the signaling dedicated to the first terminal device may be, for example, an RRC signaling (a dedicated RRC signaling), an MAC CE, a PDCCH, etc., dedicated to the first terminal device.

The embodiments of the present disclosure do not limit the scrambling manner or carrying manner of the signaling dedicated to the first terminal device. In some embodiments, the first signaling may be a dedicated RRC signaling of the terminal device, and the RRC signaling may be carried in a PDSCH scrambled using a C-RNTI or a CS-RNTI. In some embodiments, the first signaling may be a dedicated MAC CE for the terminal device, and the MAC CE may be carried in the PDSCH scrambled using the C-RNTI or the CS-RNTI. In some embodiments, the first signaling may be a dedicated PDCCH for the first terminal device, and the PDCCH may be scrambled based on the C-RNTI or the CS-RNTI.

As another implementation, the first offset may be configured based on the first signaling. The first signaling may be a signaling dedicated to the first terminal device group.

The embodiments of the present disclosure do not limit the signaling dedicated to the first terminal device group. For example, the signaling dedicated to the first terminal device group may be, for example, an RRC signaling (a dedicated RRC signaling), an MAC CE, a PDCCH, etc. dedicated to the first terminal device group.

The embodiments of the present disclosure do not limit the scrambling manner or carrying manner of the signaling dedicated to the first terminal device group. In some embodiments, the first signaling may be a dedicated RRC signaling for the terminal device group, and the RRC signaling may be carried in a PDSCH scrambled using a G-C-RNTI or a G-CS-RNTI. In some embodiments, the first signaling may be a dedicated MAC CE for the terminal device group, and the MAC CE may be carried in the PDSCH scrambled using the G-C-RNTI or the G-CS-RNTI. In some embodiments, the first signaling may be a dedicated PDCCH for the first terminal device group, and the PDCCH may be scrambled based on the G-C-RNTI or the G-CS-RNTI.

In some embodiments, the signaling dedicated to the first terminal device group may be scrambled in other manners. For example, the RRC signaling, MAC CE or PDCCH dedicated to the terminal device group may be scrambled using an MCCH-RNTI.

The embodiments of the present disclosure do not limit the indication manner of the first offset, or, the embodiments of the present disclosure do not limit a signaling content of a signaling for configuring the first offset. The following description takes the example of the first offset being configured through the first signaling, to introduce the signaling content of the first signaling.

In some embodiments, the first signaling may be the signaling dedicated to the first terminal device, or the signaling dedicated to the first terminal device group.

In some embodiments, the first signaling may be used to determine a value of the first offset. In some embodiments, the value of the first offset configured in the first signaling may be an absolute value or a relative value, which is not limited in the embodiments of the present disclosure.

In some embodiments, in a case where the value of the first offset configured by the first signaling is a relative value, the embodiments of the present disclosure do not limit a reference object corresponding to the first offset. For example, the first offset may be a relative value relative to the offset dedicated to the first terminal device, or a relative value relative to the cell common offset, or the like.

For example, the first signaling may be used to configure one or more of: the value of the first offset, an absolute value of the first offset, a difference between the first offset and the cell common offset, an increment of the first offset relative to the cell common offset, a difference between the first offset and the offset dedicated to the first terminal device, or an increment of the first offset relative to the offset dedicated to the first terminal device.

In some embodiments, a difference between the first offset and a reference object (e.g., the cell common offset or the offset dedicated to the first terminal device) may be a positive number or a non-negative number. In some embodiments, an increment of the first offset relative to the reference object may be a positive number or a non-negative number. The embodiments of the present disclosure are not limited to thereto.

As an example, the first signaling may be used to configure the absolute value of the first offset. For example, in a case where the first signaling is the signaling dedicated to the first terminal device, the first signaling may be used to configure the absolute value of the first offset. Alternatively, in a case where the first signaling is the signaling dedicated to the first terminal device group, the first signaling may be used to configure the absolute value of the first offset.

As another example, the first signaling may be used to configure the difference between the first offset and the cell common offset, or may be used to configure the increment of the first offset relative to the cell common offset. In this case, the first terminal device may determine the first offset (i.e., the offset dedicated to the first terminal device group) according to both the difference (increment) carried in the first signaling and the cell common offset.

Taking the difference (increment) carried in the first signaling as a first increment as an example, as an implementation, the first terminal device may determine the first offset according to the following formula: the first offset = the cell common offset + the first increment; as another implementation, the first terminal device may determine the first offset according to the following formula: the first offset = the cell common offset - the first increment. In the embodiments of the present disclosure, the first increment may be a positive number or a non-negative number.

In some embodiments, in a case where the first signaling is the signaling dedicated to the first terminal device, the first signaling may be used to configure a difference between the first offset and the cell common offset, or may be used to configure an increment of the first offset relative to the cell common offset. In some embodiments, in a case where the first signaling is the signaling dedicated to the first terminal device group, the first signaling may be used to configure the difference between the first offset and the cell common offset, or may be used to configure the increment of the first offset relative to the cell common offset.

As another example, the first signaling may be used to configure the difference between the first offset and the offset dedicated to the first terminal device, or may be used to configure the increment of the first offset relative to the offset dedicated to the first terminal device. In this case, the first terminal device may determine the first offset (i.e., the offset dedicated to the first terminal device group) based on both the difference (increment) carried in the first signaling and the offset dedicated to the first terminal device.

Taking the difference (increment) carried in the first signaling as a second increment as an example, as an implementation, the first terminal device may determine the first offset according to the following formula: the first offset = the offset dedicated to the first terminal device + the second increment; as another implementation, the first terminal device may determine the first offset according to the following formula: the first offset = the offset dedicated to the first terminal device - the second increment. In the embodiments of the present disclosure, the second increment may be a positive number or a non-negative number.

In some embodiments, in a case where the first signaling is the signaling dedicated to the first terminal device, the first signaling may be used to configure the difference between the first offset and the offset dedicated to the first terminal device, or may be used to configure the increment of the first offset relative to the offset dedicated to the first terminal device.

For ease of understanding, a possible implementation of determining the first offset is given below in conjunction with FIG. 10. It should be understood that the example in FIG. 10 is not intended to limit the solution of the embodiments of the present disclosure. For example, in the example of FIG. 10, the reference object corresponding to the first offset is the cell common offset, but the reference object corresponding to the first offset may also be other offset, such as the offset dedicated to the first terminal device.

As illustrated in FIG. 10, in a case where the network device does not configure the first offset for the first terminal device (i.e., the offset dedicated to the first terminal device group), the first terminal device may determine the time domain resource carrying the HARQ feedback information corresponding to the first PDSCH using the cell common offset. For example, the first terminal device may determine the time domain resource corresponding to the first PUCCH using the cell common offset.

In a case where the network device configures the increment of the first offset relative to the reference object for the first terminal device through the first signaling, the first terminal device may determine the first offset using the value of the reference object and the increment carried in the first signaling, and determine the time domain resource carrying the HARQ feedback information corresponding to the first PDSCH based on the first offset. Referring to FIG. 10, at time T1, the network device configures an increment I for the first terminal device, the first terminal device may determine the first offset (an offset I as illustrated in FIG. 10) based on the increment I and the cell common offset, and determine the time domain resource carrying the HARQ feedback information corresponding to the first PDSCH based on the offset I. At time T2, the network device configures an increment II for the first terminal device, the first terminal device may determine the first offset (an offset II as illustrated in FIG. 10) based on the increment II and the cell common offset, and determine the time domain resource carrying the HARQ feedback information corresponding to the first PDSCH based on the offset II.

In some embodiments, the first terminal device may determine the time domain resource carrying the HARQ feedback information corresponding to the first PDSCH based on the first offset (i.e., the offset specific to the first terminal device group) and a first parameter. For the introduction of the first parameter, please refer to the mentioned above, for the sake of brevity, it will not be repeated herein.

As an example, in a case where the first PDSCH is a PDSCH corresponding to a PTM transmission mode, that is, the first PDSCH scrambled using a G-RNTI or a G-CS-RNTI, the first terminal device may determine the time domain resource carrying the HARQ feedback information corresponding to the first PDSCH using an offset dedicated to the terminal device group corresponding to the G-RNTI or G-CS-RNTI, and the first parameter.

As another example, in a case where the first PDSCH is a PDSCH corresponding to a PTP transmission mode, that is, the first PDSCH scrambled using a C-RNTI or a CS-RNTI, the terminal device may determine the time domain resource carrying the HARQ feedback information corresponding to the first PDSCH using the offset dedicated to the first terminal device group and the first parameter.

As another example, in a case where the first PDSCH is the PDSCH corresponding to the PTP transmission mode, that is, the first PDSCH scrambled using the C-RNTI or CS-RNTI, the terminal device may determine the time domain resource carrying the HARQ feedback information corresponding to the first PDSCH using the offset dedicated to the first terminal device and the first parameter.

**Embodiment II: the first offset is determined based on the cell common offset.**

In the Embodiment II, the first offset may be, for example, a cell common offset.

In some embodiments, the network device may configure the cell common offset and/or an offset dedicated to the first terminal device for the first terminal device.

In some embodiments, the network device may indicate the cell common offset to the first terminal device by broadcasting.

In some embodiments, the network device may indicate the offset dedicated to the first terminal device to the first terminal device via an MAC CE.

In some embodiments, even if the network device configures the offset dedicated to the first terminal device for the first terminal device, the offset dedicated to the first terminal device may be applicable to unicast transmission of the first terminal device but not to HARQ feedback for an MBS.

In some embodiments, the first terminal device may determine a time domain resource carrying HARQ feedback information corresponding to the first PDSCH based on the first offset (i.e., the cell common offset) and the first parameter. For the introduction of the first parameter, please refer to the mentioned above, for the sake of brevity, it will not be repeated herein.

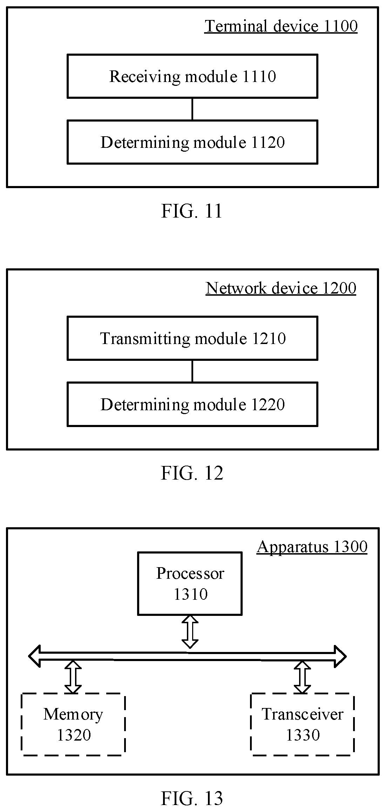

The method embodiments of the present disclosure are described in detail above in conjunction with FIGS. 1 to 10, and the apparatus embodiments of the present disclosure are described in detail below in conjunction with FIGS. 11 to 13. It should be understood that the description of the method embodiments corresponds to the description of the apparatus embodiments, and therefore, for parts that are not described in detail, reference may be made to the above method embodiments.

FIG. 11 is a schematic structural diagram of a terminal device provided by the embodiments of the present disclosure. The terminal device 1100 illustrated in FIG. 11 may include a receiving module 1110 and a determining module 1120. The terminal device 1100 is also referred to a first terminal device.

The receiving module 1110 may be configured to receive a first PDSCH for an MBS.

The determining module 1120 may be configured to determine a time domain resource corresponding to a first PUCCH according to a first offset, the first PUCCH being used to carry HARQ feedback information corresponding to the first PDSCH; where the first offset is determined based on one or more of: an offset dedicated to the first terminal device; an offset dedicated to a first terminal device group to which the first terminal device belongs; or a cell common offset.

Optionally, the first offset is determined based on the offset dedicated to the first terminal device group.

Optionally, the first offset corresponds to a first group identifier; or the first offset corresponds to multiple group identifiers including the first group identifier; where the first group identifier is associated with the first terminal device group.

Optionally, in a case where the first terminal device is not configured with the first offset, the time domain resource corresponding to the first PUCCH is determined based on the cell common offset.

Optionally, whether to configure the first offset is determined based on a first condition, and the first condition is associated with whether HARQ feedback is enabled for the first group identifier; where the first group identifier is associated with the first terminal device group.

Optionally, in a case where the HARQ feedback is enabled for the first group identifier, the first offset is configured; and/or in a case where the HARQ feedback is not started for the first group identifier, the first offset is not configured.

Optionally, the first offset is configured based on a first signaling, and the first signaling is a signaling dedicated to the first terminal device; or, the first signaling is a signaling dedicated to the first terminal device group.

Optionally, the first signaling being the signaling dedicated to the first terminal device includes: the first signaling being an RRC signaling, where the RRC signaling is carried on a PDSCH scrambled using a C-RNTI or a CS-RNTI; or, the first signaling is an MAC CE, where the MAC CE is carried on the PDSCH scrambled using the C-RNTI or the CS-RNTI; or, the first signaling is a PDCCH, where the PDCCH is scrambled based on the C-RNTI or the CS-RNTI.

Optionally, the first signaling being the signaling dedicated to the first terminal device group includes: the first signaling being an RRC signaling, where the RRC signaling is carried on a PDSCH scrambled using a G-RNTI or a G-CS-RNTI; or, the first signaling being an MAC CE, where the MAC CE is carried on the PDSCH scrambled using the G-RNTI or the G-CS-RNTI; or, the first signaling being a PDCCH, where the PDCCH is scrambled based on the G-RNTI or the G-CS-RNTI.

Optionally, the first signaling is used to configure one or more of: a value of the first offset; an absolute value of the first offset; a difference between the first offset and the cell common offset; an increment of the first offset relative to the cell common offset; a difference between the first offset and the offset dedicated to the first terminal device; or an increment of the first offset relative to the offset dedicated to the first terminal device.

Optionally, in a case where the first PDSCH is a PDSCH corresponding to a PTM transmission mode, the first offset is the offset dedicated to the first terminal device group; or, in a case where the first PDSCH is a PDSCH corresponding to a PTP transmission mode, the first offset is the offset dedicated to the first terminal device group; or, in a case where the first PDSCH is the PDSCH corresponding to the PTP transmission mode, the first offset is the offset dedicated to the first terminal device.

Optionally, the first PDSCH is associated with a first PDCCH, the first PDCCH includes a first parameter, the first parameter is used to determine the time domain resource corresponding to the first PUCCH, and the time domain resource corresponding to the first PUCCH is determined based on the first offset and the first parameter.

Optionally, the first group identifier is the G-RNTI or the G-CS-RNTI.

Optionally, the receiving module 1110 may be a transceiver 1330, and the determining module 1120 may be a processor 1310. The terminal device 1100 may further include a memory 1320, as specifically illustrated in FIG. 13.

FIG. 12 is a schematic structural diagram of a network device provided by the embodiments of the present disclosure. The network device illustrated in FIG. 12 may include a transmitting module 1210 and a determining module 1220.

The transmitting module 1210 may be configured to transmit a first PDSCH for an MBS to a first terminal device.

The determining module 1220 may be configured to determine a time domain resource corresponding to a first PUCCH according to a first offset, the first PUCCH being used to carry HARQ feedback information corresponding to the first PDSCH; where the first offset is determined based on one or more of: an offset dedicated to the first terminal device; an offset dedicated to a first terminal device group to which the first terminal device belongs; or a cell common offset.

Optionally, the first offset is determined based on the offset dedicated to the first terminal device group.

Optionally, the first offset corresponds to a first group identifier; or the first offset corresponds to multiple group identifiers including the first group identifier; where the first group identifier is associated with the first terminal device group.

Optionally, in a case where the first terminal device is not configured with the first offset, the time domain resource corresponding to the first PUCCH is determined based on the cell common offset.

Optionally, whether to configure the first offset is determined based on a first condition, and the first condition is associated with whether HARQ feedback is enabled for the first group identifier; where the first group identifier is associated with the first terminal device group.

Optionally, in a case where the HARQ feedback is enabled for the first group identifier, the first offset is configured; and/or in a case where the HARQ feedback is not enabled for the first group identifier, the first offset is not configured.

Optionally, the first offset is configured based on a first signaling, and the first signaling is a signaling dedicated to the first terminal device; or, the first signaling is a signaling dedicated to the first terminal device group.

Optionally, the first signaling being the signaling dedicated to the first terminal device includes: the first signaling being an RRC signaling, where the RRC signaling is carried on a PDSCH scrambled using a C-RNTI or a CS-RNTI; or, the first signaling being an MAC CE, where the MAC CE is carried on the PDSCH scrambled using the C-RNTI or the CS-RNTI; or, the first signaling is a PDCCH, where the PDCCH is scrambled based on the C-RNTI or the CS-RNTI.

Optionally, the first signaling being the signaling dedicated to the first terminal device group includes: the first signaling being an RRC signaling, where the RRC signaling is carried on a PDSCH scrambled using a G-RNTI or a G-CS-RNTI; or, the first signaling being an MAC CE, where the MAC CE is carried on the PDSCH scrambled using the G-RNTI or the G-CS-RNTI; or, the first signaling being a PDCCH, where the PDCCH is scrambled based on the G-RNTI or the G-CS-RNTI.

Optionally, the first signaling is used to configure one or more of: a value of the first offset; an absolute value of the first offset; a difference between the first offset and the cell common offset; an increment of the first offset relative to the cell common offset; a difference between the first offset and the offset dedicated to the first terminal device; or an increment of the first offset relative to the offset dedicated to the first terminal device.

Optionally, in a case where the first PDSCH is a PDSCH corresponding to a PTM transmission mode, the first offset is the offset dedicated to the first terminal device group; or, in a case where the first PDSCH is a PDSCH corresponding to a PTP transmission mode, the first offset is the offset dedicated to the first terminal device group; or, in a case where the first PDSCH is the PDSCH corresponding to the PTP transmission mode, the first offset is the offset dedicated to the first terminal device.

Optionally, the first PDSCH is associated with a first PDCCH, the first PDCCH includes a first parameter, the first parameter is used to determine the time domain resource corresponding to the first PUCCH, and the time domain resource corresponding to the first PUCCH is determined based on the first offset and the first parameter.

Optionally, the first group identifier is the G-RNTI or the G-CS-RNTI.

Optionally, the transmitting module 1210 may be a transceiver 1330, and the determining module 1220 may be a processor 1310. The network device 1200 may further include a memory 1320, as specifically illustrated in FIG. 13.

FIG. 13 is a schematic structural diagram of a communication apparatus according to the embodiments of the present disclosure. The dashed lines in FIG. 13 indicate that the unit or module is optional. The apparatus 1300 may be configured to implement the methods described in the above method embodiments. The apparatus 1300 may be a chip, a terminal device, or a network device.

The apparatus 1300 may include one or more processors 1310. The processor 1310 may support the apparatus 1300 to implement the methods described in the above method embodiments. The processor 1310 may be a general purpose processor or a special purpose processor. For example, the processor may be a central processing unit (CPU). Alternatively, the processor may be other general purpose processors, a digital signal processor (DSP), an application specific integrated circuit (ASIC), a field programmable gate array (FPGA) or other programmable logic devices, discrete gate or transistor logic devices, discrete hardware components, or the like. The general purpose processor may be a microprocessor, or the processor may be any conventional processor or the like.

The apparatus 1300 may further include one or more memories 1320. The memory 1320 stores a program, where the program may be performed by the processor 1310, to enable the processor 1310 to perform the method described in the above method embodiments. The memory 1320 may be independent of the processor 1310 or may be integrated into the processor 1310.

The apparatus 1300 may further include a transceiver 1330. The processor 1310 may communicate with other devices or chips through the transceiver 1330. For example, the processor 1310 may transmit and receive data with other devices or chips through the transceiver 1330.

The embodiments of the present disclosure further provide a computer-readable storage medium for storing a program. The computer-readable storage medium may be applied to the terminal device or the network device provided by the embodiments of the present disclosure, and the program enables a computer to perform the method performed by the terminal device or the network device in various embodiments of the present disclosure.

The embodiments of the present disclosure further provide a computer program product. The computer program product includes a program. The computer program product may be applied to the terminal device or the network device provided by the embodiments of the present disclosure, and the program enables a computer to perform the method performed by the terminal device or the network device in various embodiments of the present disclosure.

The embodiments of the present disclosure further provide a computer program. The computer program may be applied to the terminal device or the network device provided by the embodiments of the present disclosure, and the computer program enables a computer to perform the method performed by the terminal device or the network device in various embodiments of the present disclosure.

It should be understood that the terms "system" and "network" may be used interchangeably in the present disclosure. In addition, the terms used in the present disclosure are only used to explain the specific embodiments of the present disclosure, and are not intended to limit the present disclosure. The terms "first", "second", "third" and "fourth" in the specification, claims and drawings of the present disclosure are used to distinguish different objects rather than to describe a specific order. In addition, the terms "includes," "comprises," and "has," and any variations thereof, are intended to cover a non-exclusive inclusion.

In the embodiments of the present disclosure, the "indicate" mentioned may be a direct indication, or an indirect indication, or represent that there is an association relationship. For example, A indicating B: may mean that A directly indicates B, e.g., that B may be obtained through A; or may mean that A indirectly indicates B, e.g., that A indicates C, and B may be obtained through C; or may mean that there is an association relationship between A and B.

In the embodiments of the present disclosure, "B corresponding to A" means that B is associated with A, and B may be determined based on A. However, it should also be understood that determining B based on A does not mean determining B based solely on A, B may further be determined based on A and/or other information.

In the embodiments of the present disclosure, the term "correspond" or any variations thereof may mean a relationship of direct or indirect correspondence between the two, or a relationship of association between the two, or a relationship of indicating and being indicated, or configuring and being configured, or the like.

In the embodiments of the present disclosure, the term "include" mentioned or any variations thereof may refer to direct inclusion or indirect inclusion. Optionally, "include" mentioned in the embodiments of the present disclosure may be replaced with "indicate" or "be used to determine" or any variations thereof. For example, A including B may be replaced by A indicating B, or A is used to determine B.

In the embodiments of the present disclosure, "predefinition" or "pre-configuration" or any variations thereof may be achieved by pre-saving corresponding codes, tables or other methods that may be used to indicate relevant information in a device (e.g., including a terminal device and a network device), the present disclosure does not limit its specific implementation. For example, predefinition may refer to that predefinition in a protocol.

In the embodiments of the present disclosure, the "protocol" may refer to a standard protocol in the communications field, for example, may include an LTE protocol, an NR protocol, and related protocols used in future communication systems, which is not limited in the present disclosure.

In the embodiments of the present disclosure, the term "and/or" is used to describe an association relationship between associated objects, to indicate that there may be three relationships between the associated objects. For example, "A and/or B" may represent three cases: A alone, A and B both, and B alone. In addition, the character "/" in the present disclosure generally indicates that related objects before and after this character are in an "or" relationship.

In various embodiments of the present disclosure, the magnitude of the serial number of each of the above-mentioned processes does not mean the order of execution. The order of execution of each process should be determined by its function and internal logic, and should not constitute any limitation on the implementation process of the embodiments of the present disclosure.

In the several embodiments provided by the present disclosure, it should be understood that, the disclosed systems, apparatuses, and methods may be implemented in other ways. For example, the apparatus embodiments described above are merely schematic, for example, division of the units is only division of logical functions, and there may be other division methods in an actual implementation, for example, multiple units or components may be combined or integrated into another system, or some features may be ignored or not executed. On the other hand, the coupling or direct coupling or communicative connection between each other as shown or discussed may be indirect coupling or communicative connection of apparatus or units via some interface, which may be electrical, mechanical or other forms.

The units illustrated as separate components may be or may not be physically separated, and the components shown as units may be or may not be physical units, that is, may be located in one place, or may be distributed onto multiple network units. Some or all of the units may be selected according to actual needs, to implement the purpose of the solutions of the embodiment.

In addition, the various functional units in the various embodiments of the present disclosure may be integrated into one processing unit, or the various units may exist physically separately, or two or more units may be integrated into one unit.

The above embodiments may be implemented in whole or in part through software, hardware, firmware, or any combination thereof. When the embodiments are implemented by using a software program, the software program may be implemented in a form of a computer program product in whole or in part. The computer program product includes one or more computer instructions. When computer program instructions are loaded on and executed by a computer, processes or functions according to the embodiments of the present disclosure are generated in whole or in part. The computer may be a general purpose computer, a dedicated computer, a computer network, or any other programmable devices. The computer instructions may be stored in a computer-readable storage medium or transmitted from a computer-readable storage medium to another computer-readable storage medium. For example, the computer instructions may be transmitted from a website, a computer, a server or a data center to another website, computer, server or data center via a wired manner (e.g., a coaxial cable, an optical fiber, or a digital subscriber line (DSL)) or a wireless manner (e.g., infrared, wireless or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a digital video disc (DVD)), a semiconductor medium (e.g., a solid state drive (SSD)), or the like.

The above content is only specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be subject to the protection scope of the claims.

**Claims**

1. A wireless communication method, comprising:

   receiving, by a first terminal device, a first physical downlink shared channel (PDSCH) for a multicast broadcast service (MBS); and
   determining, by the first terminal device, a time domain resource corresponding to a first physical uplink control channel (PUCCH) according to a first offset, the first PUCCH being used to carry hybrid automatic repeat request (HARQ) feedback information corresponding to the first PDSCH;
   wherein the first offset is determined based on one or more of:

   an offset dedicated to the first terminal device;
   an offset dedicated to a first terminal device group to which the first terminal device belongs; or
   a cell common offset.

2. The method according to claim 1, wherein the first offset is determined based on the offset dedicated to the first terminal device group.

3. The method according to claim 2, wherein

   the first offset corresponds to a first group identifier; or
   the first offset corresponds to multiple group identifiers comprising the first group identifier;
   wherein the first group identifier is associated with the first terminal device group.

4. The method according to claim 2 or 3, wherein in a case where the first terminal device is not configured with the first offset, the time domain resource corresponding to the first PUCCH is determined based on the cell common offset.

5. The method according to any one of claims 2 to 4, wherein whether to configure the first offset is determined based on a first condition, and the first condition is associated with whether HARQ feedback is enabled for a first group identifier; wherein the first group identifier is associated with the first terminal device group.

6. The method according to claim 5, wherein

in a case where the HARQ feedback is enabled for the first group identifier, the first offset is configured; and/or
in a case where the HARQ feedback is not enabled for the first group identifier, the first offset is not configured.

7. The method according to any one of claims 2 to 6, wherein the first offset is configured based on a first signaling, and the first signaling is a signaling dedicated to the first terminal device; or the first signaling is a signaling dedicated to the first terminal device group.

8. The method according to claim 7, wherein the first signaling being the signaling dedicated to the first terminal device comprises:

the first signaling being a radio resource control (RRC) signaling, wherein the RRC signaling is carried on a PDSCH scrambled using a cell radio network temporary identifier (C-RNTI) or a configured scheduling RNTI (CS-RNTI); or,
the first signaling being a media access control control element (MAC CE), wherein the MAC CE is carried on the PDSCH scrambled using the C-RNTI or the CS-RNTI; or,
the first signaling being a physical downlink control channel (PDCCH), wherein the PDCCH is scrambled based on the C-RNTI or the CS-RNTI.

9. The method according to claim 7, wherein the first signaling being the signaling dedicated to the first terminal device group comprises:

the first signaling being an RRC signaling, wherein the RRC signaling is carried on a PDSCH scrambled using a group RNTI (G-RNTI) or a group configured scheduling RNTI (G-CS-RNTI); or,
the first signaling being an MAC CE, wherein the MAC CE is carried on the PDSCH scrambled using the G-RNTI or the G-CS-RNTI; or,
the first signaling being a PDCCH, wherein the PDCCH is scrambled based on the G-RNTI or the G-CS-RNTI.

10. The method according to any one of claims 7 to 9, wherein the first signaling is used to configure one or more of:

a value of the first offset;
an absolute value of the first offset;
a difference between the first offset and the cell common offset;
an increment of the first offset relative to the cell common offset;
a difference between the first offset and the offset dedicated to the first terminal device; or
an increment of the first offset relative to the offset dedicated to the first terminal device.

11. The method according to claim 1, wherein

in a case where the first PDSCH is a PDSCH corresponding to a point to multi-point (PTM) transmission mode, the first offset is the offset dedicated to the first terminal device group; or,
in a case where the first PDSCH is a PDSCH corresponding to a point to point (PTP) transmission mode, the first offset is the offset dedicated to the first terminal device group; or,
in a case where the first PDSCH is the PDSCH corresponding to the PTP transmission mode, the first offset is the offset dedicated to the first terminal device.

12. The method according to any one of claims 1 to 11, wherein the first PDSCH is associated with a first PDCCH, the first PDCCH comprises a first parameter, the first parameter is used to determine the time domain resource corresponding to the first PUCCH, and the time domain resource corresponding to the first PUCCH is determined based on the first offset and the first parameter.

13. The method according to claim 3, 5 or 6, wherein the first group identifier is a G-RNTI or a G-CS-RNTI.

14. A wireless communication method, comprising:

transmitting, by a network device, a first physical downlink shared channel (PDSCH) for a multicast broadcast service (MBS) to a first terminal device; and
determining, by the network device, a time domain resource corresponding to a first physical uplink control channel (PUCCH) according to a first offset, the first PUCCH being used to carry hybrid automatic repeat request (HARQ) feedback information corresponding to the first PDSCH;
wherein the first offset is determined based on one or more of:

an offset dedicated to the first terminal device;
an offset dedicated to a first terminal device group to which the first terminal device belongs; or
a cell common offset.

15. The method according to claim 14, wherein the first offset is determined based on the offset dedicated to the first terminal device group.

16. The method according to claim 15, wherein

the first offset corresponds to a first group identifier; or
the first offset corresponds to multiple group identifiers comprising the first group identifier; wherein the first group identifier is associated with the first terminal device group.

17. The method according to claim 15 or 16, wherein in a case where the first terminal device is not configured with the first offset, the time domain resource corresponding to the first PUCCH is determined based on the cell common offset.

18. The method according to any one of claims 15 to 17, wherein whether to configure the first offset is determined based on a first condition, and the first condition is associated with whether HARQ feedback is enabled for a first group identifier; wherein the first group identifier is associated with the first terminal device group.

19. The method according to claim 18, wherein

in a case where the HARQ feedback is enabled for the first group identifier, the first offset is configured; and/or
in a case where the HARQ feedback is not enabled for the first group identifier, the first offset is not configured.

20. The method according to any one of claims 15 to 19, wherein the first offset is configured based on a first signaling, and the first signaling is a signaling dedicated to the first terminal device; or the first signaling is a signaling dedicated to the first terminal device group.

21. The method according to claim 20, wherein the first signaling being the signaling dedicated to the first terminal device comprises:

the first signaling being a radio resource control (RRC) signaling, wherein the RRC signaling is carried on a PDSCH scrambled using a cell radio network temporary identifier (C-RNTI) or a configured scheduling RNTI (CS-RNTI); or,
the first signaling being a media access control control element (MAC CE), wherein the MAC CE is carried on the PDSCH scrambled using the C-RNTI or the CS-RNTI; or,
the first signaling being a physical downlink control channel (PDCCH), wherein the PDCCH is scrambled based on the C-RNTI or the CS-RNTI.

22. The method according to claim 20, wherein the first signaling being the signaling dedicated to the first terminal device group comprises:

the first signaling being an RRC signaling, wherein the RRC signaling is carried on a PDSCH scrambled using a group RNTI (G-RNTI) or a group configured scheduling RNTI (G-CS-RNTI); or,
the first signaling being an MAC CE, wherein the MAC CE is carried on the PDSCH scrambled using the G-RNTI or the G-CS-RNTI; or,
the first signaling being a PDCCH, wherein the PDCCH is scrambled based on the G-RNTI or the G-CS-RNTI.

23. The method according to any one of claims 20 to 22, wherein the first signaling is used to configure one or more of:

a value of the first offset;
an absolute value of the first offset;
a difference between the first offset and the cell common offset;
an increment of the first offset relative to the cell common offset;
a difference between the first offset and the offset dedicated to the first terminal device; or
an increment of the first offset relative to the offset dedicated to the first terminal device.

24. The method according to claim 14, wherein

in a case where the first PDSCH is a PDSCH corresponding to a point to multi-point (PTM) transmission mode, the first offset is the offset dedicated to the first terminal device group; or,
in a case where the first PDSCH is a PDSCH corresponding to a point to point (PTP) transmission mode, the first offset is the offset dedicated to the first terminal device group; or,
in a case where the first PDSCH is the PDSCH corresponding to the PTP transmission mode, the first offset is the offset dedicated to the first terminal device.

25. The method according to any one of claims 14 to 24, wherein the first PDSCH is associated with a first PDCCH, the first PDCCH comprises a first parameter, the first parameter is used to determine the time domain resource corresponding to the first PUCCH, and the time domain resource corresponding to the first PUCCH is determined based on the first offset and the first parameter.

26. The method according to claim 16, 18 or 19, wherein the first group identifier is a G-RNTI or a G-CS-RNTI.

27. A terminal device, wherein the terminal device is a first terminal device, and the terminal device comprises:

a receiving module, configured to receive a first physical downlink shared channel (PDSCH) for a multicast broadcast service (MBS); and
a determining module, configured to determine a time domain resource corresponding to a first physical uplink control channel (PUCCH) according to a first offset, the first PUCCH being used to carry hybrid automatic repeat request (HARQ) feedback information corresponding to the first PDSCH;
wherein the first offset is determined based on one or more of:

an offset dedicated to the first terminal device;
an offset dedicated to a first terminal device group to which the first terminal device belongs; or
a cell common offset.

28. The terminal device according to claim 27, wherein the first offset is determined based on the offset dedicated to the first terminal device group.

29. The terminal device according to claim 28, wherein

the first offset corresponds to a first group identifier; or
the first offset corresponds to multiple group identifiers comprising the first group identifier;
wherein the first group identifier is associated with the first terminal device group.

30. The terminal device according to claim 28 or 29, wherein in a case where the first terminal device is not configured with the first offset, the time domain resource corresponding to the first PUCCH is determined based on the cell common offset.

31. The terminal device according to any one of claims 28 to 30, wherein whether to configure the first offset is determined based on a first condition, and the first condition is associated with whether HARQ feedback is enabled for a first group identifier; wherein the first group identifier is associated with the first terminal device group.

32. The terminal device according to claim 31, wherein

in a case where the HARQ feedback is enabled for the first group identifier, the first offset is configured; and/or
in a case where the HARQ feedback is not enabled for the first group identifier, the first offset is not configured.

33. The terminal device according to any one of claims 28 to 32, wherein the first offset is configured based on a first signaling, and the first signaling is a signaling dedicated to the first terminal device; or the first signaling is a signaling dedicated to the first terminal device group.

34. The terminal device according to claim 33, wherein the first signaling being the signaling dedicated to the first terminal device comprises:

the first signaling being a radio resource control (RRC) signaling, wherein the RRC signaling is carried on a PDSCH scrambled using a cell radio network temporary identifier (C-RNTI) or a configured scheduling RNTI (CS-RNTI); or,
the first signaling being a media access control control element (MAC CE), wherein the MAC CE is carried on the PDSCH scrambled using the C-RNTI or the CS-RNTI; or,
the first signaling being a physical downlink control channel (PDCCH), wherein the PDCCH is scrambled based on the C-RNTI or the CS-RNTI.

35. The terminal device according to claim 33, wherein the first signaling being the signaling dedicated to the first terminal device group comprises:

the first signaling being an RRC signaling, wherein the RRC signaling is carried on a PDSCH scrambled using a group RNTI (G-RNTI) or a group configured scheduling RNTI (G-CS-RNTI); or,
the first signaling being an MAC CE, wherein the MAC CE is carried on the PDSCH scrambled using the G-RNTI or the G-CS-RNTI; or,
the first signaling being a PDCCH, wherein the PDCCH is scrambled based on the G-RNTI or the G-CS-RNTI.

36. The terminal device according to any one of claims 33 to 35, wherein the first signaling is used to configure one or more of:

a value of the first offset;
an absolute value of the first offset;
a difference between the first offset and the cell common offset;
an increment of the first offset relative to the cell common offset;

a difference between the first offset and the offset dedicated to the first terminal device; or an increment of the first offset relative to the offset dedicated to the first terminal device.

37. The terminal device according to claim 27, wherein

in a case where the first PDSCH is a PDSCH corresponding to a point to multi-point (PTM) transmission mode, the first offset is the offset dedicated to the first terminal device group; or, in a case where the first PDSCH is a PDSCH corresponding to a point to point (PTP) transmission mode, the first offset is the offset dedicated to the first terminal device group; or, in a case where the first PDSCH is the PDSCH corresponding to the PTP transmission mode, the first offset is the offset dedicated to the first terminal device.

38. The terminal device according to any one of claims 27 to 37, wherein the first PDSCH is associated with a first PDCCH, the first PDCCH comprises a first parameter, the first parameter is used to determine the time domain resource corresponding to the first PUCCH, and the time domain resource corresponding to the first PUCCH is determined based on the first offset and the first parameter.

39. The terminal device according to claim 29, 31 or 32, wherein the first group identifier is a G-RNTI or a G-CS-RNTI.

40. A network device, comprising:

a transmitting module, configured to transmit a first physical downlink shared channel (PDSCH) for a multicast broadcast service (MBS) to a first terminal device; and a determining module, configured to determine a time domain resource corresponding to a first physical uplink control channel (PUCCH) according to a first offset, the first PUCCH being used to carry hybrid automatic repeat request (HARQ) feedback information corresponding to the first PDSCH; wherein the first offset is determined based on one or more of:

an offset dedicated to the first terminal device; an offset dedicated to a first terminal device group to which the first terminal device belongs; or a cell common offset.

41. The network device according to claim 40, wherein the first offset is determined based on the offset dedicated to the first terminal device group.

42. The network device according to claim 41, wherein

the first offset corresponds to a first group identifier; or the first offset corresponds to multiple group identifiers comprising the first group identifier; wherein the first group identifier is associated with the first terminal device group.

43. The network device according to claim 41 or 42, wherein in a case where the first terminal device is not configured with the first offset, the time domain resource corresponding to the first PUCCH is determined based on the cell common offset.

44. The network device according to any one of claims 41 to 43, wherein whether to configure the first offset is determined based on a first condition, and the first condition is associated with whether HARQ feedback is enabled for a first group identifier; wherein the first group identifier is associated with the first terminal device group.

45. The network device according to claim 44, wherein

in a case where the HARQ feedback is enabled for the first group identifier, the first offset is configured; and/or in a case where the HARQ feedback is not enabled for the first group identifier, the first offset is not configured.

46. The network device according to any one of claims 41 to 45, wherein the first offset is configured based on a first signaling, and the first signaling is a signaling dedicated to the first terminal device; or the first signaling is a signaling dedicated to the first terminal device group.

47. The network device according to claim 46, wherein the first signaling being the signaling dedicated to the first terminal device comprises:

the first signaling being a radio resource control (RRC) signaling, wherein the RRC signaling is carried on a PDSCH scrambled using a cell radio network temporary identifier (C-RNTI) or a configured scheduling RNTI (CS-RNTI); or, the first signaling being a media access control control element (MAC CE), wherein the MAC CE is carried on the PDSCH scrambled using the C-RNTI or the CS-RNTI; or, the first signaling being a physical downlink control channel (PDCCH), wherein the PDCCH is scrambled based on the C-RNTI or the CS-RNTI.

**48.** The network device according to claim 46, wherein the first signaling being the signaling dedicated to the first terminal device group comprises:

the first signaling being an RRC signaling, wherein the RRC signaling is carried on a PDSCH scrambled using a group RNTI (G-RNTI) or a group configured scheduling RNTI (G-CS-RNTI); or,
the first signaling being an MAC CE, wherein the MAC CE is carried on the PDSCH scrambled using the G-RNTI or the G-CS-RNTI; or,
the first signaling being a PDCCH, wherein the PDCCH is scrambled based on the G-RNTI or the G-CS-RNTI.

**49.** The network device according to any one of claims 46 to 48, wherein the first signaling is used to configure one or more of:

a value of the first offset;
an absolute value of the first offset;
a difference between the first offset and the cell common offset;
an increment of the first offset relative to the cell common offset;
a difference between the first offset and the offset dedicated to the first terminal device; or
an increment of the first offset relative to the offset dedicated to the first terminal device.

**50.** The network device according to claim 40, wherein

in a case where the first PDSCH is a PDSCH corresponding to a point to multi-point (PTM) transmission mode, the first offset is the offset dedicated to the first terminal device group; or,
in a case where the first PDSCH is a PDSCH corresponding to a point to point (PTP) transmission mode, the first offset is the offset dedicated to the first terminal device group; or,
in a case where the first PDSCH is the PDSCH corresponding to the PTP transmission mode, the first offset is the offset dedicated to the first terminal device.

**51.** The network device according to any one of claims 40 to 50, wherein the first PDSCH is associated with a first PDCCH, the first PDCCH comprises a first parameter, the first parameter is used to determine the time domain resource corresponding to the first PUCCH, and the time domain resource corresponding to the first PUCCH is determined based on the first offset and the first parameter.

**52.** The network device according to claim 42, 44 or 45, wherein the first group identifier is a G-RNTI or a G-CS-RNTI.

**53.** A terminal device, comprising a memory, a processor and a transceiver, wherein the memory is configured to store a program, and the processor is configured to call the program in the memory, to enable the terminal device to perform the method according to any one of claims 1 to 13.

**54.** A network device, comprising a memory, a processor and a transceiver, wherein the memory is configured to store a program, and the processor is configured to call the program in the memory, to enable the network device to perform the method according to any one of claims 14 to 26.

**55.** An apparatus, comprising a processor, configured to call a program from a memory, to enable the apparatus to perform the method according to any one of claims 1 to 26.

**56.** A chip, comprising a processor, configured to call a program from a memory, to enable a device equipped with the chip to perform the method according to any one of claims 1 to 26.

**57.** A computer-readable storage medium, wherein a program is stored thereon, and the program enables a computer to perform the method according to any one of claims 1 to 26.

**58.** A computer program product, comprising a program, wherein the program enables a computer to perform the method according to any one of claims 1 to 26.

**59.** A computer program, wherein the computer program enables a computer to perform the method according to any one of claims 1 to 26.

100

FIG. 1A

FIG. 1B

FIG. 1C

FIG. 2

FIG. 3

FIG. 4A

FIG. 4B

FIG. 5

FIG. 6

FIG. 7

GC-PDCCH
G-RNTI g

UE a

UE b

UE c

GC-PDSCH
G-RNTI g

FIG. 8

First terminal device

Network device

S910: a first PDSCH for an MBS

S920: determine a time domain resource corresponding to a first PUCCH according to a first offset

FIG. 9

First offset

Cell common offset
Offset I
Offset II

Increment I

Increment II

t

The dedicated offset for the first terminal device group is not configured, UE uses the cell common offset

T1 UE determines the offset I using the increment I

Configured increment I

T2 UE determines the offset II using the increment II

Configured increment II

↓ DL signaling indicates configuration of the first offset

FIG. 10

Terminal device 1100

Receiving module 1110

Determining module 1120

FIG. 11

Network device 1200

Transmitting module 1210

Determining module 1220

FIG. 12

Apparatus 1300

Processor
1310

Memory
1320

Transceiver
1330

FIG. 13

# EP 4 753 349 A1

## INTERNATIONAL SEARCH REPORT

International application No.

**PCT/CN2023/108837**

### A. CLASSIFICATION OF SUBJECT MATTER

H04W72/0446(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS: CNTXT; CNKI; VEN; USTXT; EPTXT; WOTXT; 3GPP: 多播, 组播, 偏移, 时域, 混合自动重传, 下行共享信道, 上行控制信道, pdcch, pdsch, mbs, offset, harq

### C. DOCUMENTS CONSIDERED TO BE RELEVANT

| Category* | Citation of document, with indication, where appropriate, of the relevant passages | Relevant to claim No. |
|---|---|---|
| X | CN 116171544 A (APPLE INC.) 26 May 2023 (2023-05-26) description, paragraphs [0054]-[0112] | 1-59 |
| X | WO 2022083290 A1 (TELEFONAKTIEBOLAGET LM ERICSSON (PUBL) et al.) 28 April 2022 (2022-04-28) description, paragraphs [0074]-[0212] | 1-59 |
| X | WO 2023014151 A1 (LG ELECTRONICS INC.) 09 February 2023 (2023-02-09) description, paragraphs [0198]-[0568] | 1-59 |
| A | CN 113287359 A (LENOVO (SINGAPORE) PTE. LTD.) 20 August 2021 (2021-08-20) entire document | 1-59 |
| A | US 2022417906 A1 (KT CORP.) 29 December 2022 (2022-12-29) entire document | 1-59 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **27 March 2024** | **29 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

33

**INTERNATIONAL SEARCH REPORT**
Information on patent family members

| International application No. |
|---|
| **PCT/CN2023/108837** |

| Patent document cited in search report | | | Publication date (day/month/year) | Patent family member(s) | | | Publication date (day/month/year) |
|---|---|---|---|---|---|---|---|
| CN | 116171544 | A | 26 May 2023 | WO | 2023044744 | A1 | 30 March 2023 |
| WO | 2022083290 | A1 | 28 April 2022 | US | 2023397201 | A1 | 07 December 2023 |
| | | | | EP | 4233442 | A1 | 30 August 2023 |
| WO | 2023014151 | A1 | 09 February 2023 | | None | | |
| CN | 113287359 | A | 20 August 2021 | US | 2020229202 | A1 | 16 July 2020 |
| | | | | US | 11357017 | B2 | 07 June 2022 |
| | | | | WO | 2020144529 | A1 | 16 July 2020 |
| | | | | EP | 3909366 | A1 | 17 November 2021 |
| | | | | US | 2022272714 | A1 | 25 August 2022 |
| | | | | US | 11864222 | B2 | 02 January 2024 |
| US | 2022417906 | A1 | 29 December 2022 | KR | 20220117132 | A | 23 August 2022 |

Form PCT/ISA/210 (patent family annex) (July 2022)